# EUROPÄISCHE PATENTSCHRIFT

(11) **EP 3 318 850 B1**
(45) Veröffentlichungstag und Bekanntmachung des Hinweises auf die Patenterteilung: **01.07.2020**
(21) Anmeldenummer: 17198397.6
(22) Anmeldetag: 25.10.2017
(51) Int. Cl.: G01G 19/00

(54) **DYNAMISCHE WAAGE FÜR AUF DER SEITE LIEGEND TRANSPORTIERTE FLACHE GÜTER UND STEUERUNGSVERFAHREN DER DYNAMISCHEN WAAGE**
DYNAMIC SCALE FOR FLAT GOODS TRANSPORTED LYING ON THEIR SIDE, AND CONTROL METHOD OF THE DYNAMIC SCALE
BASCULE DYNAMIQUE POUR PRODUITS PLATS TRANSPORTÉS DE MANIÈRE À ÊTRE POSÉS SUR LE CÔTÉ ET PROCÉDÉ DE COMMANDE DE LA BASCULE DYNAMIQUE

(30) Priorität: 01.11.2016 DE 202016106125 U
(43) Veröffentlichungstag der Anmeldung: 09.05.2018
(73) Patentinhaber: Francotyp-Postalia GmbH, 13089 Berlin (DE)
(72) Erfinder: GESERICH, Frank, 16515 Friedrichsthal (DE)

(56) Entgegenhaltungen:
- EP-A1- 2 282 185
- US-A1- 2001 015 291

## Beschreibung

Die Erfindung betrifft eine dynamische Waage für auf der Seite liegend transportierte flache Güter gemäß des Oberbegriffs des Patentanspruchs 1 und ein Steuerungsverfahren der dynamischen Waage gemäß des Oberbegriffs des Patentanspruchs 17. Die auf der Seite liegend transportierten flachen Güter sind beispielsweise Poststücke, wie kuvertierte Briefe oder Postkarten. Eine solche dynamische Waage wird in einem Gutverarbeitungssystem, beispielsweise als modulare Station einer Poststraße eines Frankiersystems eingesetzt.

Die Poststraße eines Frankiersystems besteht in üblicher Weise aus einer Vielzahl von einzelnen aneinandergereihten Poststückverarbeitungsstationen. Eine Anlegestation ist poststromaufwärts der Vereinzelungsstation, d.h. oft am Anfang der Poststraße aufgestellt und dient zum Anlegen von einzelnen oder gestapelten Poststücken an die Vereinzelungsstation, welche den Stapel vereinzelt. Die vereinzelten Poststücke werden über die dynamische Waage einer Frankiermaschine zugeführt und dann in einer Ablagestation abgelegt. Bei Verarbeiten von flachen Gütern mit unterschiedlichem Format soll der Stapel möglichst gleichförmige flache Güter enthalten, wobei jedoch Formatabweichungen bis zu 20% noch zulässig sind. Wenn oben von einem Stapel gesprochen wird, sind Briefstapel, Postkartenstapel und andere Poststückstapel gemeint, welche sich vereinzeln lassen, aber auch ein anderes gestapeltes flaches Gut soll nicht ausgeschlossen werden.

In Amerika gilt es die Standardformate "Letter" zu verarbeiten, wie Letter 8 1/2 inch x 11 inch (21,59 cm x 27,94 cm), Letter 8 1/2 inch x 14 inch (21,59 cm x 35,56 cm), Letter 14 7/8 inch x 11,69 inch (37,8 cm x 29,69 cm).

Insbesondere in Deutschland sind die Formate B4 (25,0 cm x 35,3 cm), B5 (17,6 cm x 25,0 cm), B6 (12,5 cm x 17,6 cm) und C4 (22,9 cm x 32,4 cm), C5 (16,2 cm x 22,9 cm), C6 (11,4 cm x 16,2 cm) üblich. Die Größen der deutschen Papierformate sind bereits im Jahr 1922 vom Deutschen Institut für Normung (DIN) in der DIN-Norm DIN 476 festgelegt worden.

Eine dynamische Waage des Frankiersystems Jetmail® war schon vorbekannt (EP 974 819 B1). Auf einer Wiegeeinheit soll sich der zu wiegende Brief vollständig und allein befinden, um eine ausreichend genaue und fehlerfreie Gewichtsmessung zu erzielen. Die Länge der Wiegeeinheit wird dabei von der Transportgeschwindigkeit, dem längsten zu wiegenden Brief und einer zusätzlichen Messstrecke bestimmt. Aber die Briefformate B4, die den längsten zu wiegenden Briefen entsprechen, erfordern eine große Lücke. Die Lücke zwischen den Standardbriefen wird dann so groß, dass sich kein hoher Briefdurchsatz erzielen lässt. Somit werden aber nur 50 lpm (letters per minutes) erreicht. Der Durchsatz wird deshalb am Standardbrief orientiert, denn die Lücke ist kleiner. Standardbriefe sind diejenigen Briefe der deutschen Post AG mit einem Format von (90 mm bis 125 mm x 140 mm bis 235 mm) und machen den größten Anteil am Briefaufkommen aus. Unter dem Begriff Standardbrief sollen nachfolgend die Formate C6 lang (235 mm Länge) und US10 (241 mm Länge) verstanden werden. Der Durchsatz lässt sich zwar theoretisch durch eine Erhöhung der Transportgeschwindigkeit der Briefe durch eine entsprechend angesteuerte Transporteinheit der dynamischen Waage weiter steigern, doch muss die Transportgeschwindigkeit auch an die übrigen Poststückverarbeitungsstationen des gesamten Frankiersystems angepasst sein. Es wäre nachteilig, wenn die Mehrzahl der Stationen bzw. Module des gesamten Frankiersystems diesbezüglich überarbeitet werden müssen.

Eine dynamische Waage (DE 10 2011 100 176 B4) des Frankiersystems Centormail® weist zwei kaskadiert angeordnete Wiegeeinheiten auf, durch die ein auf der Kante stehender Brief mit einer Transportgeschwindigkeit von 680 mm/s hindurchläuft. Damit werden bei Standardbriefen bis zu 90 lpm erreicht. Außerdem können alle weiteren Briefformate dynamisch verarbeitet werden. Allerdings ist der materielle und finanzielle Aufwand verhältnismäßig groß.

Aus dem Patent US 5,990,422 ist bereits eine dynamische Waagen bekannt, die aus einer Vielzahl von einzelnen Förderwaagen besteht, die nacheinander in einer Reihe angeordnet sind und an denen Sensoren angeordnet wurden, um neben der Gewichtsmessung zusätzlich mindestens ein Dimensionsmessung durchzuführen. Die Länge der jeweiligen Artikel wird durch Sensoren gemessen, die zwischen den Förderwaagen angeordnet sind. Bezüglich der Kosten sind die Anzahl der Sensoren und der Förderwaagen sowie ein umständliches Steuerungsverfahren in Abhängigkeit von der Länge des Stückgutes aber nachteilig. Auch tritt nicht selten der Fall auf, dass flache Güter in einen vergrößerten Abstand von einer Ausrichtwand am Eingang der dynamischen Waage entfernt zugeführt werden. Durch die dynamische Waage kann nicht gesichert werden, dass die flachen Güter von einer Ausrichtwand am Ausgang der dynamischen Waage weniger entfernt sind.

Die dynamische Waage nach dem US 8,466,380 B2 wird als eine Vorrichtung zum Messen von Artikeln bezeichnet, die auf der Seite liegend transportiert werden. Die Vorrichtung umfasst einen Förderteil, eine Vielzahl von Messteilen und einen Bestimmungsteil. Der Förderteil enthält eine Vielzahl von Fördereinrichtungen, die nebeneinander in einer Reihe angeordnet für Artikel vorgesehen sind, die nacheinander den in einer Linie angeordneten Förderwaagen der dynamischen Waage zugeführt werden. Die Vielzahl von Messteilen messen das Gewicht oder die Abmessungen der jeweiligen Artikel, die nacheinander von den Transportteilen der dynamischen Waage transportiert werden. Der Bestimmungsteil bestimmt das Gewicht oder die Abmessungen der jeweiligen Artikel auf der Grundlage der Messwerte durch die Vielzahl der Messteile. Die Dimensionen der jeweiligen Artikel werden durch eine Vielzahl von Sensoren gemessen, die in einem Portalrahmen zwischen den Förderwaagen bzw. in vorbestimmten Intervallen in drei Richtungen angeordnet sind, wobei die drei Richtungen zueinander orthogonal liegen. Die Vielzahl von Sensoren eines Längenmesssensors ist in den Seitenteilen eines Portalrahmens angeordnet, die in Förderrichtung zwischen dem Endabschnitt der ersten Förderwiegeeinheit und dem ersten Abschnitt der zweiten Förderwiegeeinheit liegen. Ein Breitensensor ist in den horizontalen Seitenteilen des Portalrahmens ausgebildet, die quer zur Förderrichtung liegen. Der Breitensensor umfasst Lichtempfangselemente, die gegenüber von Lichtemissionselementen angeordnet sind, um die Breite von jedem der transportierten Artikel in einer Richtung zu erfassen, die orthogonal zur Förderrichtung liegt. Eine Mehrzahl von lichtemittierenden Elementen eines Dickensensors ist an einem ersten vertikalen Seitenelement des Portalrahmens angeordnet, während die Lichtempfangselemente an einem anderen vertikalen Seitenelement des Portalrahmen gegenüber dem vorgenannten ersten vertikalen Seitenelement angeordnet sind. Die lichtemittierenden Elemente und die Lichtempfangselemente sind vertikal von der Nähe der Oberfläche der Fördereinrichtungen der ersten und der zweiten Förderwiegeeinheiten angeordnet. Schon weil viele Förderwiegeeinheiten erforderlich sind, ist offensichtlich, dass ein solcher Aufbau raumaufwendig ist und nicht in ein kleines Gehäuse passt.

Aus der EP 2 282 185 A1 ist eine Vorrichtung und ein Verfahren für die automatische Entscheidung, ob die Masse eines Gegenstands innerhalb eines vorgegebenen Masse-Bereichs liegt oder nicht, bekannt.

Aus der DE 102010009431 A1 ist eine schnelle dynamische Waage und ein Verfahren zur Steuerung der schnellen dynamischen Waage bekannt, die neben einer Wiegeeinheit mit einer für das Wiegen wirksamen verkürzten Länge bereits eine schaltbare Abzugsvorrichtung für auf der Kante stehend transportierte Stückgüter, wie kuvertierte Briefe, aufweist. Von einer Steuerungseinheit werden fünf Sensoren abgefragt, um die Position des Stückguts zu bestimmen und drei Motoren angesteuert. Die Wiegeeinheit besteht aus einer Wiegezelle und aus einem Transportmechanismus mit einem ersten Motor zum Antrieb desselben, wobei der Transportmechanismus mit dem Motor auf der Wiegezelle angeordnet ist, wodurch die Wiegezelle mit einer Vorlast belastet wird, mit einem ersten Sensor, der über der Achse der ersten Umlenkrolle des Transportmechanismus am Beginn der Wiegeeinheit angeordnet ist und der ein erstes Signal an eine Steuereinheit abgibt, welche den Wägevorgang für ein Stückgut startet. Ein zweiter Sensor ist in Transportrichtung in einer Position nahe der Mitte der Wiegeeinheit angeordnet und gibt ein zweites Signal an die Steuereinheit ab, welche eine Mitteilung erzeugt, dass ein auf das Stückgut folgendes Stückgut zugeführt werden kann. Die Position des zweiten Sensors befindet sich von der Achse der ersten Umlenkrolle in einem Abstand d1, der der Länge LBmin eines kürzesten Briefes plus einen Sicherheitsabstand entspricht. Durch die Verkürzung der Länge Lw der Wiegeeinheit, kann der Abstand zwischen aufeinanderfolgenden Stückgütern entsprechend verkürzt werden. Ein Aktor oder ein zweiter Motor dient zum Öffnen und Schließen der schaltbaren Abzugsvorrichtung. Ein dritter Motor bewirkt den Brieftransport innerhalb der schaltbaren Abzugsvorrichtung. Ein vierter Motor ist gegebenenfalls zum Zu- und Wegschalten der schaltbaren Abzugsvorrichtung vorgesehen. Die Achse einer zweiten Umlenkrolle des Transportmechanismus liegt in einem Abstand d2 von dem zweiten Sensor in Transportrichtung. Ein dritter Sensor ist in einem Abstand d3 von der Achse der zweiten Umlenkrolle vor der schaltbaren Abzugsvorrichtung positioniert. Ein vierter Sensor und der Aktor und/oder die Motoren sind in der schaltbaren Abzugsvorrichtung angeordnet. Das erlaubt es, sowohl die kürzesten als auch die längsten Stückgüter von der Wiegeeinheit abzuziehen und weiter zu transportieren. Die Abzugsvorrichtung wird hinzugeschaltet, um das Stückgut einzuklemmen, wenn die Vorderkante des Stückgutes den vierten Sensor am Eingang der Abzugsvorrichtung erreicht, wobei der Wägevorgang dann bereits beendet ist. Das eingeklemmte Stückgut wird aus der Abzugsvorrichtung in Transportrichtung heraustransportiert. Außerdem kann stromabwärts die Wiegeeinheit ein fünfter Sensor in einem fünften Abstand hinter dem vierten Sensor in der Abzugsvorrichtung vorgesehen sein. Das Verfahren umfasst auch dann ein a) Hinzuschalten der Abzugsvorrichtung, wenn der Wägevorgang nicht beendet ist, b) Stoppen des Transports des Stückguts in der Waage, c) Zurücktransport des Stückguts auf die Wiegeeinheit, d) Statisches Wägen des Stückguts, e) Weitersteuerung der Wiegeeinheit und der Abzugsvorrichtung zum Auswurf des Stückguts. Von Nachteil wären ein relativ komplizierter Aufbau der schaltbaren Abzugsvorrichtung und die umständliche Ansteuerung der dynamischen Waage, wenn ein Transport des Stückguts in der Waage gestoppt wird. Dadurch und beim Zurücktransport des Stückguts auf die Wiegeeinheit, vor dem folgenden statischen Wägen des Stückguts sowie bei der Weitersteuerung der Wiegeeinheit mit einem Wiederanfahren des Motors treten ungewollte Schwingungen auf, was das Wägen beeinflussen kann und/oder mindestens den Wägeprozeß verlangsamt.

Eine Aufgabe bestand deshalb darin, eine dynamische Waage mit nur einer Wägezelle und mit einer Abzugsvorrichtung für auf der Seite liegend transportierte flache Güter und ein Steuerungsverfahren zu schaffen, welche die o.g. Nachteile nicht aufweisen. Die dynamische Waage soll einfach und kostengünstig aufgebaut sein. Die Anzahl an Sensoren und Motoren, die eine Steuerung der dynamischen Waage gestatten, soll minimiert werden. Außerdem sollen einfache Halterungen für zusätzliche Sensoren am Ein- und Ausgang der Waage entwickelt werden, die mindestens eine Dimensionsmessung ermöglichen.

Unter Vermeidung eines umständlichen Steuerungsverfahren der dynamischen Waage soll bei einer Transportgeschwindigkeit von 530 mm/s, insbesondere bei Standardbriefen, wie beispielsweise des US10 Format sowie bei dem Standardbrief und dem Kompaktbrief der Deutschen Post AG in Deutschland ein hoher Durchsatz von 90 lpm (Briefen pro Minute) erzielt werden. Für alle Briefformate von der Postkarte mit 140 mm Länge bis zum B4 Format mit 353 mm Länge sowie für unterschiedliche Briefdicken soll ein einfaches und gleiches Steuerungsverfahren geschaffen werden.

Die Aufgabe wird mit den Merkmalen einer dynamischen Waage gemäß des Oberbegriffs des Patentanspruchs 1 und ein Steuerungsverfahren der dynamischen Waage gemäß des Oberbegriffs des Patentanspruchs 17 gelöst.

Die dynamische Waage weist eine eingangsseitige erste Baugruppe zur Dickenmessung, eine Transportvorrichtung mit an einem Wiegeteller angeordneten Transportbändern, Lichtschranken als Sensoren, Encoder und eine zweite Baugruppe zur Bestimmung der Breite des Gutes mit einem Breitensensor, eine ausgangsseitige Abzugsvorrichtung mit einer Auswurfrolle sowie eine Steuereinheit auf, die mit den vorgenannten Baugruppen zu deren Steuerung kommunikativ verbunden ist, mit einem ersten Sensor S1 am Eingang und einem zweiten Sensor S2 am Ausgang des Wiegetellers, wobei die Steuereinheit programmiert ist,
- eine Längenmessung und den Antrieb der am Wiegeteller angeordneten Transportriemen der Transportvorrichtung mit einer ersten Transportgeschwindigkeit V1 zu starten,
- zum Start und zur Durchführung eines dynamischen Wägevorgangs solange, bis der zweite Sensor S2 am Ausgang des Wiegetellers die Vorderkante des ersten flachen Guts G1 detektiert und die Dickenmessung beendet wird,
- zum Überprüfen, ob ein gültiges Gewichtsmessergebnis vorliegt, zum Bestimmen des Gewichts des ersten flachen Guts G1 und Weitertransport des ersten flachen Guts G1 mit der ersten Transportgeschwindigkeit V1 in Transportrichtung x zum Ausgang der dynamischen Waage, wenn ein gültiges Gewichtsmessergebnis vorliegt,
- zum Bestimmen des Gewichts des ersten flachen Guts G1, wenn der Wägevorgang nicht beendet ist, und zum Weitertransport des ersten flachen Guts G1 mit einer zweiten Transportgeschwindigkeit V2 in Transportrichtung x zum Ausgang der dynamischen Waage, wobei die zweiten Transportgeschwindigkeit V2 kleiner ist, als die erste Transportgeschwindigkeit V1,
- zur Durchführung einer Breitenmessung des flachen Guts,
- zum Einleiten der Beendigung der Gewichtsmessung während des dynamischen Wägevorgangs, wenn ein dritter Sensor S3 am Eingang einer Abzugsvorrichtung der dynamischen Waage die Vorderkante des ersten flachen Guts G1 detektiert und eine Überprüfung ergibt, dass kein gültiges Gewichtsmessergebnis vorliegt und
- zum Zuführen eines nächsten flachen Guts G2 dem Eingang der dynamischen Waage, wenn die Überprüfung ergibt, dass ein gültiges Gewichtsmessergebnis vorliegt und
- zur Weiteransteuerung des Antriebes der Transportriemen der Wiegeeinheit mit der ersten Transportgeschwindigkeit V1 und Ansteuerung eines zweiten Motors mit einer dritten Transportgeschwindigkeit in Transportrichtung x, wobei der Motor eine Auswurfrolle antreibt, die zum Auswurf des flachen Guts G1 in der Abzugsvorrichtung angeordnet ist, wobei die dritte Transportgeschwindigkeit V3 größer ist, als die erste Transportgeschwindigkeit V1 sowie
- zur Rückverzweigung (w) und Wiederholung der Routine, falls kein Stop-Befehl gegeben wurde.

Die Steuereinheit der dynamischen Waage ist eines aus der Vielzahl von Baugruppen eines Mittels zur Bestimmung der Länge eines flachen Guts. Bei Start der Längenmessung erfolgt der Start eines Zählvorgangs und ein Zählen von Encoderimpulsen während des Antriebs der Transportriemen, nachdem der erste Sensor S1 die Vorderkante des ersten flachen Guts G1 detektiert hat, wobei die Steuereinheit anschließend eine Dickenmessung startet und solange durchführt, während das flache Gut entlang eines Wegabschnitts des Transportpfades T transportiert wird, bis der erste Sensor S1 am Eingang eines Wiegetellers die Hinterkante des ersten flachen Guts G1 detektiert, wobei die Längenmessung beendet wird.

Es ist vorgesehen, dass der erste Sensor S1 ein Bestandteil des Mittels zur Bestimmung der Länge eines flachen Guts ist, wobei dieser Bestandteil des Mittels innerhalb der dynamischen Waage angeordnet ist. Damit soll aber nicht ausgeschlossen werden, dass mindestens ein weiterer Bestandteil des vorgenannten Mittels außerhalb der dynamischen Waage vorgesehen ist.

Es ist weiterhin vorgesehen, dass die Sensoren S1, S2, S3 ... als Durchlichtschranken ausgebildet sind. Damit soll aber nicht ausgeschlossen werden, dass mindestens ein weiterer Sensor vorgesehen ist, der nicht als Durchlichtschranke ausgebildet ist.

Ein Steuerungsverfahren der dynamischen Waage umfasst die Schritte:
a) Durch die Steuereinheit wird eine Längenmessung gestartet und danach der Antrieb der am Wiegeteller angeordneten Transportriemen der Transportvorrich-tung mit einer ersten Transportgeschwindigkeit V1 gestartet,
b) Start eines dynamischen Wägevorgangs, bis die zweite Lichtschranke LS2 am Ausgang eines Wiegetellers die Vorderkante des ersten flachen Guts G1 detektiert und Beenden der Dickenmessung,
c) Überprüfen, ob ein gültiges Gewichtsmessergebnis vorliegt,
d) Bestimmen des Gewichts des ersten flachen Guts G1 und Weitertransport des ersten flachen Guts G1 mit der ersten Transportgeschwindigkeit V1 in Transportrichtung x zum Ausgang der dynamischen Waage, wenn ein gültiges Gewichtsmessergebnis vorliegt,
e) Bestimmen des Gewichts des ersten flachen Guts G1, wenn der Wägevorgang nicht beendet ist, und Weitertransport des ersten flachen Guts G1 mit einer zweiten Transportgeschwindigkeit V2 in Transportrichtung x zum Ausgang der dynamischen Waage, wobei die zweiten Transportgeschwindigkeit V2 kleiner ist, als die erste Transportgeschwindigkeit V1,
f) Durchführung einer Breitenmessung des flachen Guts,
g) Einleiten der Beendigung der Gewichtsmessung während des dynamischen Wägevorgangs, wenn die dritte Lichtschranke LS3 am Eingang einer Abzugsvorrichtung der dynamischen Waage die Vorderkante des ersten flachen Guts G1 detektiert und die Überprüfung ergibt, dass kein gültiges Gewichtsmessergebnis vorliegt und
h) Zuführen eines nächsten flachen Guts G2 dem Eingang der dynamischen Waage, wenn die Überprüfung ergibt, dass ein gültiges Gewichtsmessergebnis vorliegt und
i) Weiteransteuerung des Antriebes der Transportriemen der Wiegeeinheit mit der ersten Transportgeschwindigkeit V1 und Ansteuerung eines zweiten Motors mit einer dritten Transportgeschwindigkeit in Transportrichtung x, wobei der Motor eine Auswurfrolle antreibt, die zum Auswurf des flachen Guts G1 in der Abzugsvorrichtung angeordnet ist, wobei die dritte Transportgeschwindigkeit V3 größer ist, als die erste Transportgeschwindigkeit V1 sowie
k) Rückverzweigung (w) und Wiederholung der Routine, falls kein Stop-Befehl gegeben wurde.

Der Wiegeteller der dynamischen Waage weist eine Führungswand und mit einer Transportvorrichtung für ein auf der Seite liegend zu transportierendes flaches Gut und ein Zuführdeck sowie die ausgangsseitige Abzugsvorrichtung auf. Das Zuführdeck ist in vier Teilabschnitte unterteilt, die in Transportrichtung aufgereiht aneinander grenzen. Ein erster Teilabschnitt des Zuführdecks liegt im Eingangsbereich der dynamischen Waage. Ein Wiegeteller in einem mittleren zweiten Teilabschnitt des Zuführdecks liegt als Last auf einer einzigen Wägezelle auf. Die Wiegetellerlänge im zweiten Teilabschnitt des Zuführdecks ist für flache Güter mit einem Standard-Format optimiert, so dass für diese möglichst kleine Lücken zwischen den flachen Gütern erzeugt werden und ein maximaler Durchsatz an flachen Gütern pro Minute erzielt wird. Eine Abdeckung für einen Breitensensor folgt in einem mittleren dritten Teilabschnitt. Die beiden mittleren Teilabschnitte ermöglichen zusammen eine dynamische Verarbeitung von längeren flachen Gütern, beispielsweise von langen Formaten bis zum B4-Format, wobei der dritte Teilabschnitt so gestaltet ist, dass ein langes flaches Gut, das beispielsweise das B4-Format aufweist, beim Verlassen des zweiten Teilabschnitts, den dritten Teilabschnitt nicht berührt. Eine Auswurfrolle und mindestens ein Andruckfinger bilden eine einfache Abzugsvorrichtung, die nahe an dem Ausgang der dynamischen Waage angeordnet ist. Die Abzugsvorrichtung ist auf einer Bodenplatte des Chassis der dynamischen Waage angeordnet. Der Wiegeteller der dynamischen Waage weist eine trapezförmige Grundfläche mit zwei nicht parallelen Seitenschenkeln auf, wobei einer von den nicht parallelen Seitenschenkeln an die Führungswand des Wiegetellers stößt und einen Längsrand bildet. Der jeweils größere von zwei parallelen Seitenschenkeln der trapezförmigen Grundfläche bildet einen Querrand des Wiegetellers und ist gutstromeingangsseitig der dynamischen Waage angeordnet. Es ist vorgesehen, dass in y-Richtung eines kartesischen Koordinatensystems von der Führungswand des Wiegetellers entfernt ein Metallwinkelblech auf einer ebenen Bodenplatte des Chassis montiert ist, dass ein maximaler Blechwandabstand A zwischen einer Stelle an der Rückwand einer Gehäuseunterschale der dynamischen Waage und einer nach oben abgewinkelten Blechwand des Metallwinkelblechs besteht. Es ist eine virtuelle Tangente vorstellbar, die an der in y-Richtung entferntesten Stelle der Gehäuserückwand der dynamischen Waage anliegt. Eine Ecke zwischen dem gutstromeingangsseitigen Querrand und dem Längsrand des Wiegetellers ist in einem maximalen Randabstand B von der virtuellen Tangente angeordnet. Es ist weiter vorgesehen, dass eine Ausrichtwand einen gutstromeingangsseitigen ersten Teilabschnitt des Zuführdecks der dynamischen Waage in y-Richtung begrenzt und in einem gutstromeingangsseitigen Abstand C von der Tangente entfernt angeordnet ist. Eine weitere Ausrichtwand begrenzt einen gutstromausgangsseitigen vierten Teilabschnitt des Zuführdecks in y-Richtung des kartesischen Koordinatensystems und ist in einem gutstromausgangsseitigen Abstand D von der Tangente angeordnet, wobei für die Abstände A < B < C ≤ D gilt.

Die dynamische Waage weist drei Sensoren auf, die elektrisch mit der Steuereinheit der dynamischen Waage verbunden sind, um Ansteuersignale zu empfangen und Sensorsignale zu übertragen, und einen Motor in der Abzugsvorrichtung auf sowie einen Motor, der in einem Gestell unter dem Wiegeteller angeordnet ist, wobei die Motoren elektrisch mit der Steuereinheit der dynamischen Waage verbunden sind, um Steuersignale eines Steuerungsverfahrens der dynamischen Waage zu empfangen. Das Zuführdeck weist Öffnungen für den ersten und dritten Sensor auf. Es ist vorgesehen, dass ein zweiter Sensor in Transportrichtung x in einem ersten Abstand von dem ersten Sensor entfernt hinter dem ausgangsseitigen Querrand des Wiegetellers angeordnet ist und dass der dritte Sensor der Ausrichtwand am Ausgang der Waage unmittelbar benachbart und in einem zweiten Abstand von dem zweiten Sensor entfernt in Transportrichtung x angeordnet ist, wobei der erste Abstand größer als der zweite Abstand ist.

Es ist vorgesehen, dass auch Mittel zur Bestimmung der drei Dimensionen des flachen Guts vollständig oder teilweise in der dynamischen Waage angeordnet sind. Vorzugsweise ist nur ein Mittel zur Bestimmung einer der drei Dimensionen des flachen Guts teilweise in der dynamischen Waage angeordnet. Die anderen Mittel zur Bestimmung der restlichen zwei Dimensionen des flachen Guts sind vollständig in der dynamischen Waage angeordnet. In dem bevorzugten Ausführungsbeispiel ist der erste Sensor zugleich ein Bestandteil eines Mittels zur Bestimmung der Länge eines zu wiegenden flachen Gutes. Ein anderer Bestandteil eines vorgenannten Mittels ist ein externer Sensor, der - in einer nicht gezeigten Weise - in einer der dynamischen Wage im Transportpfad vorgelagerten Station, beispielsweise in einer automatischen Zuführstation, angeordnet ist. Ein Mikroprozessor einer Steuereinheit der dynamischen Waage ist ein weiterer Bestandteil des ersten Mittels zur Bestimmung der Länge des zu wiegenden flachen Guts. Die Halterung des ersten Mittels zur Bestimmung der Länge und eine Halterung einer zweiten Baugruppe zur Bestimmung der Breite des Gutes sind auf der Bodenplatte angeordnet. Eine Halterung einer ersten Baugruppe zur Bestimmung der Dicke des flachen Guts ist auf einem Wiegeteller angeordnet. Es ist vorgesehen, dass eine Halterung für den ersten Sensor unmittelbar vor dem Eingang des Wiegetellers an dem Chassis der dynamischen Waage montiert ist, wobei der erste Sensor ein Signal abgibt, wenn die Vorderkante eines flachen Guts den ersten Sensor erreicht, wobei das erste Signal ein Startsignal für den Betrieb der dynamischen Waage bildet.

Es ist weiter vorgesehen, dass eine Halterung für einen Dickensensor der ersten Baugruppe unmittelbar nach dem eingangsseitigen Querrand des Wiegetellers an der Rückseite der Führungswand des Wiegetellers montiert ist, dass eine Halterung für den zweiten Sensor der dynamischen Waage nach dem ausgangsseitigen Querrand des Wiegetellers an dem Chassis der dynamischen Waage montiert ist, wobei der zweite Sensor ein Signal abgibt, wenn die Vorderkante des flachen Guts den zweiten Sensor erreicht.

Es ist außerdem vorgesehen, dass eine Halterung für einen Breitensensor der zweiten Baugruppe In Transportrichtung unmittelbar nach dem ausgangsseitigen Querrand des Wiegetellers unter einer Abdeckung des Breitensensors montiert ist, wobei die Abdeckung am Wiegeteller montiert ist und ebenfalls die Wägezelle belastet. Die Abdeckung weist ein Fenster für den Breitensensor auf. Eine gutstromeingangsseitige Kante der Abdeckung liegt tiefer als eine gutstromausgangsseitige Kante der Abdeckung. Die Halterung des dem Wiegeteller nachgeordneten Breitensensors ist an dem Chassis der dynamischen Waage befestigt. Der dritte Sensor ragt dem Breitensensor in Transportrichtung nachgeordnet und unmittelbar nach der gutstromausgangsseitigen Kante der Abdeckung in den Transportpfad. Eine Halterung für den dritten Sensor unmittelbar vor einer Welle einer Auswurfrolle der Abzugsvorrichtung an dem Chassis der dynamischen Waage montiert. Die Auswurfrolle der Abzugsvorrichtung weist einen Radius auf, der 4 bis 6 mal größer ist als der Radius der Welle auf dem die Auswurfrolle montiert ist. Der dritte Sensor ist in einem dem Wiegeteller am nächsten liegenden Bereich neben der Welle, zwischen dem Radius der Auswurfrolle und dem Radius der Welle, vorzugsweise am Rand der Auswurfrolle angeordnet.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1,: Draufsicht auf eine vereinfachte schematische Anordnung von Stationen eines bekannten Gutverarbeitungssystems,
- Fig. 2,: perspektivische Darstellung einer dynamischen Waage für auf der Seite liegend transportierte flache Güter, von vorn rechts oben,
- Fig. 3,: Draufsicht auf eine dynamische Waage ohne Gehäuse,
- Fig. 4a,: vereinfachte schematische Ansicht einer Transportvorrichtung der dynamischen Waage von vorn, in einer ersten Arbeitsphase vor dem Start,
- Fig. 4b,: vereinfachte schematische Ansicht einer Transportvorrichtung der dynamischen Waage mit einer alternativen Abdeckung für den Breitensensor,
- Fig. 5,: perspektivische Darstellung einer Abzugsvorrichtung der dynamischen Waage, von vorn rechts oben,
- Fig. 6,: vereinfachte schematische Ansicht der Transportvorrichtung von vorn in einer zweiten Arbeitsphase bei dem Start des Wiegens von flachen Gütern mittels der Wägezelle der dynamischen Waage,
- Fig. 7,: vereinfachte schematische Ansicht der Transportvorrichtung von vorn in einer dritten Phase bei Beendigung des Wiegens von flachen Gütern mittels der Wägezelle der dynamischen Waage,
- Fig. 8,: vereinfachte schematische Ansicht der Transportvorrichtung von vorn in einer vierten Phase vor dem Auswerfen eines flachen Gutes nach Beendigung des Wiegens mittels der Wägezelle der dynamischen Waage,
- Fig. 9,: vereinfachte schematische Ansicht der Transportvorrichtung von vorn in einer fünften Phase während des Auswerfens eines gewogenen flachen Gutes aus der dynamischen Waage,
- Fig.10,: perspektivischen Darstellung einer ersten Baugruppe zur Dickenmessung eines zu wiegenden flachen Gutes der dynamischen Waage, von vorn,
- Fig.11,: perspektivischen Darstellung eines Details der ersten Baugruppe, von vorn, in einer Phase zwischen Phase 1 und 2 während einer Dickenmessung eines zu wiegenden flachen Gutes mittels der dynamischen Waage.
- Fig. 12,: vereinfachter schematischer Ablaufplan.

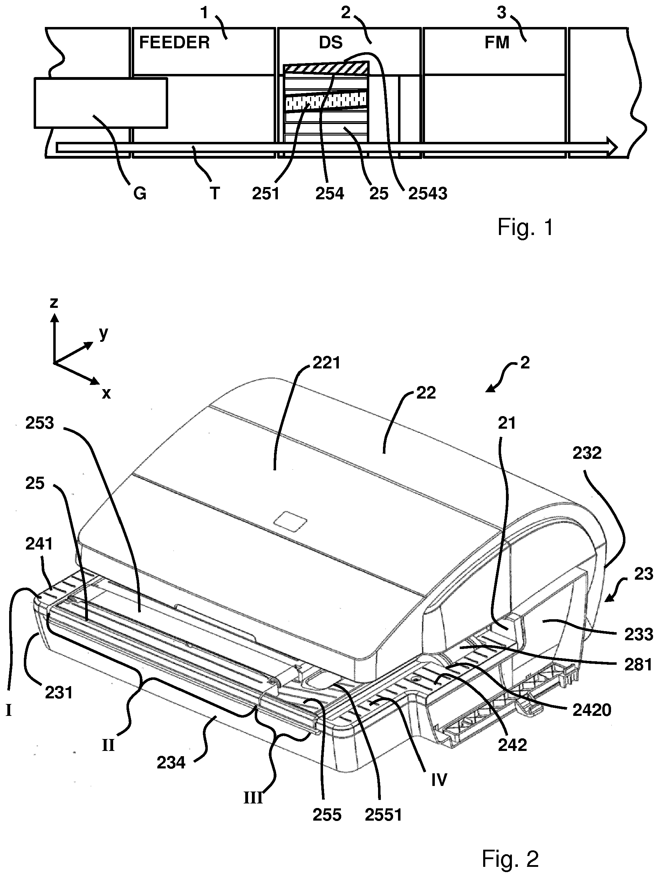

Die Figur 1 zeigt eine Draufsicht auf eine vereinfachte schematische Anordnung von Stationen eines bekannten Gutverarbeitungssystems. Ein flaches Gut G wird entlang eines Transportpfades T transportiert und durchläuft mehrere Stationen des Gutverarbeitungssystems. Bei mehreren flachen Gütern, die nacheinander transportiert werden, spricht man auch von einem Gutstrom. Eine erste Station 1 ist einer zweiten Station 2, der dynamischen Waage (DS), gutstromaufwärts vorangestellt. Ein Wiegeteller 25 der dynamischen Waage hat eine trapezförmige Grundfläche mit zwei nicht parallelen Seitenschenkeln, wobei einer der nicht parallelen Seitenschenkel und eine Führungswand 254 des Wiegetellers stößt und einen Längsrand ausbildet. Der jeweils größere von zwei parallelen Seitenschenkeln der trapezförmigen Grundfläche bildet einen Querrand, der gutstromeingangsseitig der dynamischen Waage angeordnet ist. Eine dritte Station 3 ist gutstromabwärts, also im Transportpfad nach der dynamischen Waage (DS) angeordnet. Beispielsweise bei einem Frankiersystem ist die erste Station 1 eine Vereinzelungsstation zur automatischen Zuführung (FEEDER) vereinzelter flacher Güter und die dritte Station 3 ist eine Frankiermaschine (FM). Die Stationen 1 und 2 weisen eine Transportvorrichtung mit mindestens einem Transportband 251 und einem Freilauf (nicht gezeigt) auf. Das mindestens eine Transportband 251 führt flaches Gut an eine Führungswand 254 in einem spitzen Winkel heran. Ein Kragen (schraffiert) ist von der oberen Kante der Führungswand 254 ist bis zu einem äußeren Rand abgewinkelt. Der äußere Rand 2543 des Wiegetellers 25 liegt parallel zu der Längskante des mindestens einen Transportbandes 251. Die Transportgeschwindigkeit wird in Transportrichtung x von Station zu Station erhöht oder ist mindestens gleich groß. Deshalb und aufgrund des Freilaufes ist jede Station in der Lage, ein flaches Gut G aus der vorangehend angeordneten Station herauszuziehen und weiter zu transportieren.

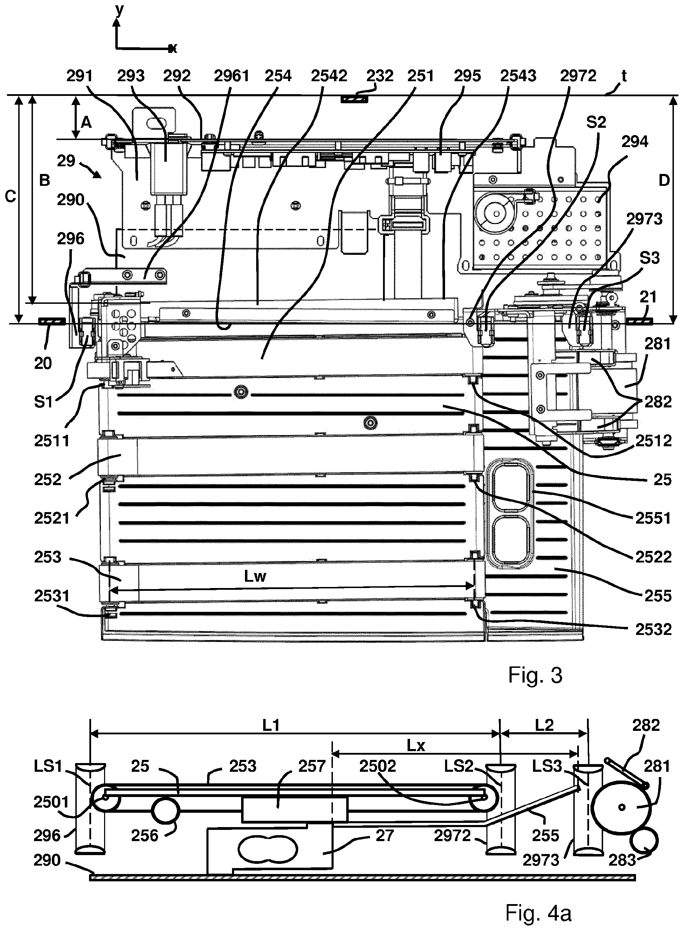

Die Figur 2 zeigt eine perspektivische Darstellung einer dynamischen Waage 2 für auf der Seite liegend transportierte flache Güter, von vorn rechts oben. Eine Gehäuseoberschale 22 ist mit einer aufklappbaren durchsichtigen Haube 221 ausgestattet und auf einer Gehäuseunterschale 23 aufgesetzt, welche zwei Seitenwände 231, 233, eine Gehäuserückwand 232 und eine Vorderwand 234 aufweist. Ein Zuführdeck 24 ist gutstromeingangseitig sowie gutstromausgangseitig auf der Gehäuseunterschale 23 montiert. Das Zuführdeck 24 wird gutstromausgangseitig durch eine Ausrichtwand 21 in y-Richtung begrenzt.
Das Zuführdeck 24 besteht aus einem gutstromeingangseitigen ersten Teilabschnitt I und einem gutstromausgangseitigen vierten Teilabschnitt IV, die durch einen zweiten Abschnitt II und dritten Abschnitt III voneinander getrennt sind, wobei in dem zweiten Abschnitt II der Wiegeteller 25 und im dritten Abschnitt III eine an dem Wiegeteller montierte Abdeckung 255 für einen Breitensensors angeordnet sind. In dem dritten Abschnitt III ist mindestens eine erste Fensteröffnung 2551 in der Abdeckung 255 des Breitensensors vorgesehen, die sich in y-Richtung erstreckt und gegenüber einem Transportbereichs eines dritten Transportriemens 253 beginnt, der auf dem Wiegeteller 25 am weitesten von einer Führungswand 254 (Fig.3) des Wiegetellers 25 entfernt angeordnet ist. Der gutstromeingangseitige Teilabschnitt I und der gutstromausgangseitige Teilabschnitt IV des vorgenannten Zuführdecks 241, 242 liegen annähernd in einer gleichen Höhe über einer Bodenplatte 290 (Fig.3). Eine - nicht sichtbare - Ausrichtwand 20 begrenzt den ersten Teilabschnitt I des Zuführdecks in y-Richtung und eine Ausrichtwand 21 begrenzt den vierten Teilabschnitt IV des Zuführdecks in y-Richtung. Die gutstromeingangsseitige Ausrichtwand 20 ist in einer etwas geringeren Entfernung von der Tangente t angeordnet, als die gutstromausgangsseitige Ausrichtwand 21. Auch der gutstromeingangseitige erste Teilabschnitt I und der gutstromausgangseitige vierte Teilabschnitt IV des vorgenannten Zuführdecks 24 sowie die Abdeckung 255 für den Breitensensor weisen weitere Fensteröffnungen für eine Vielzahl von Sensoren auf. Diese Sensoren, die in der Darstellung nach Fig.2 durch eine Gehäuseoberschale verdeckt sind, werden nachfolgend anhand der Figur 3 erläutert.

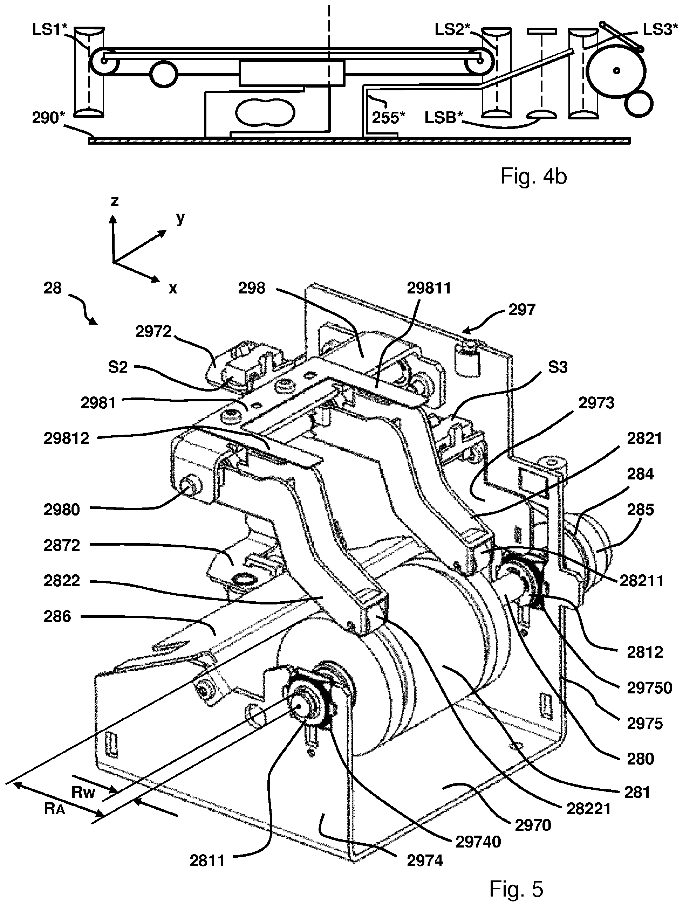

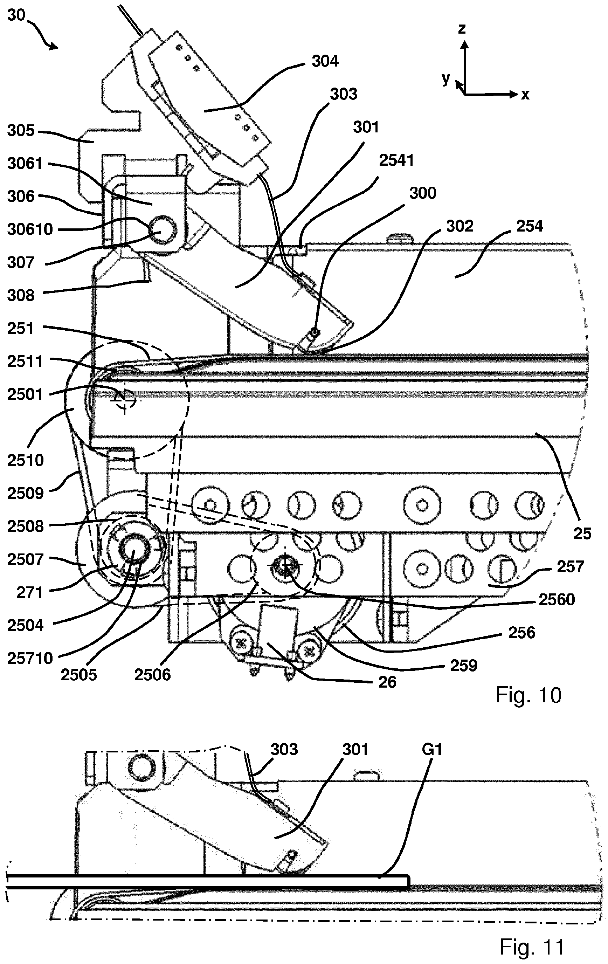

In der Fig. 3 ist eine Draufsicht auf eine dynamische Waage ohne Gehäuse gezeigt. Die Gehäuseoberschale ist abmontiert und von der Gehäuseunterschale 23 (Fig. 2) sind nur eine Stelle der Gehäuserückwand 232 und ein Teil der zwei Ausrichtwände 20, 21 für flache Güter dargestellt. Die dynamische Waage weist ein Chassis 29 mit einer ebenen Bodenplatte 290 und einem darauf montierten Metallwinkelblech 291 auf, wobei von dem Metallwinkelblech 291 nach oben eine Blechwand 292, also in z-Richtung abgewinkelt ist. Die eine Stelle der Rückwand 232 der Gehäuseunterschale 23 der dynamischen Waage liegt in einem maximalen Blechwandabstand A = 2 bis 4 cm in y-Richtung eines kartesischen Koordinatensystems von der abgewinkelten Blechwand 292 entfernt. Es ist vorstellbar, eine virtuelle Tangente t an diese Stelle anzulegen, die sich parallel zu der Transportrichtung x erstreckt. Die abgewinkelte Blechwand 292 ist somit am nächsten zu der vorgenannten Stelle der Gehäuserückwand 232 der Unterschale angeordnet und liegt zu der Tangente parallel. Auf einer Vorderseite der abgewinkelten Blechwand 292 ist eine Leiterplatte eines Mainboards 295 lösbar befestigt. Die Leiterplatte trägt eine Steuereinheit, die von einem Netzteil 294 gespeist wird. Eine Netzsteckbuchse 293 zum Netzanschluss an das Netzteil 294 ist über eine - nicht dargestellte - Öffnung in der Gehäuserückwand von extern zugänglich. Ein u-förmig gebogenes Halteblech 296 für einen ersten Sensor S1 ist gutstromeingangsseitig der dynamischen Waage auf der Bodenplatte 290 und im hinteren Bereich der Waage zwischen dem Metallwinkelblech 291 und dem Wiegeteller 25 montiert. Die Führungswand 254 ist in der Höhe, also in z-Richtung begrenzt. Von einer oberen Kante 2541 (Fig. 10) der Führungswand 254 ist ein Kragen in y-Richtung abgewinkelt. Der Kragen 2542 ist in y-Richtung ausgedehnt und endet in einem äußeren geraden Rand 2543 des Wiegetellers 25, wobei sich der Rand 2543 nicht parallel zur Transportrichtung x erstreckt. Eine gutstromeingangsseitige Ecke am äußeren Rand 2543 des Kragens des Wiegetellers 25 nahe der Führungswand 254 ist in einem maximalen Randabstand B zu der virtuellen Tangente angeordnet. Die Führungswand 254 dient zur Führung einer Längskante eines zu wiegenden flachen Gutes während dessen Transportes. Die Gehäuserückwand 232 ist leicht nach außen gewölbt und die Führungswand 254 des Wiegetellers ist gerade ausgebildet. Wenn angenommen wird, dass die virtuelle Tangente t an der am weitesten in y-Richtung entfernten Stelle der Gehäuserückwand 232 angelegt wird, dann liegt die Führungswand 254 des Wiegetellers zu der Tangente in einem Winkel von ca. 0,1° bis 1,5°, der von links, also seinem gutstromabwärtigen Ende, nach rechts, also in Richtung des gutstromaufwärtigen Anfangs der dynamischen Waage spitz zuläuft. Der gutstromeingangsseitige erste Teilabschnitt (I, Fig. 2) des Zuführdecks 24 wird durch die gutstromeingangsseitige Ausrichtwand 20 in y-Richtung begrenzt. Der gutstromausgangseitige vierte Teilabschnitt (IV, Fig. 2) des Zuführdecks 24 wird durch die gutstromausgangsseitige Ausrichtwand 21 in y-Richtung begrenzt. Die Ausrichtwand 20 ist in einem gutstromeingangsseitigen Abstand C und die Ausrichtwand 21 ist in einem gutstromausgangsseitigen Abstand D von der virtuellen Tangente t angeordnet, wobei gilt A < B < C ≤ D.
Die (nicht gezeigte) Unterseite des Wiegetellers ist auf einem Gestell liegend montiert angeordnet und das Gestell ist an einem (nicht gezeigten) Lasteinleitungspunkt einer Wägezelle befestigt, wobei die Wägezelle auf der ebenen Bodenplatte montiert ist (Fig. 4). Ein zu wiegendes flaches Gut wird mittels mindestens einem Transportriemen 251, 252, 253 in einem spitzen Winkel zur Transportrichtung x mit einer ersten Transportgeschwindigkeit über den Wiegeteller 25 hinwegbewegt, sobald ein Steuerungsverfahren der dynamischen Waage startet und ein (nicht gezeigter) erster Motor angesteuert wird. Es ist vorgesehen, dass die Antriebswelle 2501 (Fig.4) der ersten Umlenkrollen 2511, 2521, 2531 und die nicht angetriebene Welle 2502 (Fig.4) der zweiten Umlenkrollen 2512, 2522, 2532 des mindestens einen Transportriemens 251, 252, 253 in einem spitzen Winkel von 0,1° bis 1,5° zur y-Richtung angeordnet sind. Daraus ergibt sich, dass der mindestens eine Transportriemen 251, 252, 253 auf dem Wiegeteller 25 so angeordnet ist, dass sich gutstromeingangsseitig auf dem Wiegeteller 25 ein erster Transportriemenabstand zur Führungswand 254 des Wiegetellers in y-Richtung ergibt, der größer als ein zweiter Transportriemenabstand ist, der in Transportrichtung x parallel verschoben gemessen wird. Vorzugsweise drei Transportriemen 251, 252, 253 sind auf dem Wiegeteller 25 parallel zueinander, aber nicht parallel zur Führungswand 254 angeordnet. Das u-förmig gebogene Halteblech 296 ist mit einem Winkelstück 2961 an der Bodenplatte 290 so montiert, dass das Winkelstück die ebenen Bodenplatte in z-Richtung und teilweise entgegen der Transportrichtung x überragt. Das u-förmig gebogene Halteblech 296 hat zwei Abwinkelungen in entgegengesetzter Richtung zur y-Richtung und trägt auf seinen beiden Abwinkelungen jeweils ein Empfänger- oder ein Senderteil des ersten Sensors S1, wobei der erste Sensor S1 mit einer Elektronik-Schaltung des Mainboards elektrisch verbunden ist. Ein erster Motor (Fig. 4) zum Antrieb der Transportriemen wird von eine Steuereinheit des Mainboards gestartet, sobald der erste Sensor S1 die Vorderkante eines ersten Briefes detektiert, der von einer Vereinzelungsstation 1 zuvor aus einem Stapel vereinzelt wurde, wobei die Transportriemen über den Wiegeteller 25 bewegbar angeordneten sind. Der erste Sensor S1 kann zusätzlich zur Längenmessung des flachen Gutes verwendet werden. Eine jeweils erste Umlenkrolle 2511, 2521, 2531 eines jeden Transportriemens 251, 252, 253 ist gutstromaufwärts am Wiegeteller angeordnet. Eine jeweils zweite Umlenkrolle 2512, 2522, 2532 eines jeden Transportriemens ist gutstromabwärts am Wiegeteller angeordnet. Ein zweiter und dritter Sensor sind ausgangsseitig des Wiegetellers in einer Halterung 297 montiert. Die Sensoren sind beispielsweise als Durchlichtschranke LS1, LS2, LS3 ausgebildet. Die Halterung des zweiten und dritten Sensors S2, S3 besteht aus zwei u-förmig gebogenen Halteblechen, die in der Halterung 297 montiert sind, die mit einer in y-Richtung weisenden ersten Abwinkelung (nicht gezeigt) auf der ebenen Bodenplatte 290 montiert ist. Die Anordnung von Empfänger und Senderteil entspricht derjenigen des ersten Sensors. Die Halterung weist nahe an der zweiten Umlenkrolle ein u-förmig gebogenes Halteblech 2972 für den zweiten Sensor S2 sowie in einem Bereich einer Auswurfrolle ein u-förmig gebogenes Halteblech 2973 für den dritten Sensor S3 auf. Die beiden u-förmig gebogenen Haltebleche 2972, 2973 weisen jeweils zwei Abwinkelungen auf, die sich in eine entgegensetzt zur y-Richtung weisenden Richtung erstrecken. Je ein Joch verbindet diese beiden Abwinkelungen. Die u-förmig gebogenen Haltebleche 2972, 2973 liegen dabei in einem Abstand in Transportrichtung x nebeneinander und mit ihrem Joch parallel zur Blechwand 292. Der Wiegeteller 25 hat eine wirksame Länge Lw, die kleiner als eine erste Länge L1 zwischen dem ersten und zweiten Sensor ist und die Abdeckung 255 hat in Transportrichtung x eine Länge Lx, die größer als eine zweite Länge L2 zwischen dem zweiten und dritten Sensor ist, wobei gilt L2 < L1 (Fig. 4). Die wirksame Länge Lw des Wiegetellers 25 in Transportrichtung x des kartesischen Koordinatensystems wird von einem standardmäßig sehr häufig verwendeten längsten zu wiegenden Gut plus einer zusätzlichen Messstrecke bestimmt, die das Gut bei seiner Bewegung auf dem Wiegeteller zurücklegt, solange des Wiegeergebnis noch ermittelt wird. Die Abdeckung 255 für den dem Wiegeteller 25 nachgeordneten Breitensensor liegt tief unterhalb der unteren Abwinkelung des Halteblechs 2972 des zweiten Sensors und steigt schräg zum Eingang des erhöhten Teilabschnitts IV des vorgenannten Zuführdecks 242 an. Die Abdeckung 255 (Fig. 2) weist eine Fensteröffnung 2551 zwischen den beiden Halteblechen 2972, 2973 auf. Eine Auswurfrolle 281 und Andruckmechanismus 282 einer Abzugsvorrichtung 28 sind am Ausgang der dynamischen Waage angeordnet. Die Abzugsvorrichtung 28 ist auf der Bodenplatte 290 montiert.

In der Fig. 4a ist eine vereinfachte schematische Ansicht einer Transportvorrichtung der dynamischen Waage von vorn, in einer ersten Arbeitsphase vor dem Start des Transports von flachen Gütern mittels der Transportriemen der dynamischen Waage dargestellt. Zwischen den Empfänger- oder ein Senderteilen der Sensoren bilden sich während des Betriebes die Lichtstrahlen der Lichtschranken LS1, LS2, LS3 aus. Die erste Lichtschranke LS1 liegt entgegengesetzt zur Transportrichtung x in einem ersten Abstand E > ½(L1 - Lw) + K vor einer Antriebswelle 2501 der ersten Umlenkrollen. Die zweite Lichtschranke LS2 liegt in Transportrichtung x in einem zweiten Abstand F > ½(L1 - Lw) + K nach einer Antriebswelle 2502 der zweiten Umlenkrollen. Die Achsen der Antriebswellen 2501, 2502 liegen in einem spitzen Winkel von 0,1° bis 1,5° zur y-Richtung des kartesischen Koordinatensystems, so dass die flachen Gütern mittels der Transportriemen während des Betriebes der dynamischen Waage näher an die Führungswand des Wiegetellers heran transportiert werden (Fig. 3). Der Abstand der Antriebswellen 2501 und 2502 des Wiegetellers 25 ergibt die wirksame Länge Lw und der Summand K ist ein zusätzlicher Sicherheitsabstand. Die erste Länge L1 liegt zwischen den Lichtschranken LS1 und LS2 und die zweite Länge L2 liegt zwischen den Lichtschranken LS2 und LS3. Die Sender-/Empfänger-Bauteile der ersten Lichtschranke LS1 sind in einem Halteblech 296 vor dem Wiegeteller 25 angeordnet und gestattet der Steuereinheit des Mainboards (Fig. 3) eine Unterbrechung des Lichtstrahles durch eine Vorderkante eines flachen Gutes frühzeitig zu detektieren. Bei einem Detektieren der Vorderkante des ersten flachen Guts wird durch die Steuereinheit der Antrieb der am Wiegeteller angeordneten Transportriemen der Transportvorrichtung gestartet. Mit jeder Lichtschranke ist außerdem eine elektronische Schaltung elektrisch verbunden, die beispielsweise in einem Mainboard angeordnet und vorgesehen ist, um eine erhöhte Immunität gegen Fremdlichteinfluss auf optische Sensoren erreichen. Der zweite Sensor ist auch als Lichtschranke LS2 ausgebildet und dient zum Detektieren der Vorderkante des Briefes am Ausgang des Wiegetellers. Die Sender-/Empfänger-Bauteile der zweiten Lichtschranke LS2 sind an dem Transportpfad in einem Halteblech 2972 unmittelbar nach den Umlenkrollen der Transportriemen des Wiegetellers 25 angeordnet.

Der dritte Sensor ist ebenfalls als Lichtschranke LS3 ausgebildet und dient zum Detektieren der Vorderkante des Briefes am Ende des Wiegetellers. Die Sender-/Empfänger-Bauteile der dritten Lichtschranke LS3 sind an dem Transportpfad in einem Halteblech 2973 unmittelbar vor der Auswurfrolle 281 angeordnet. Der dritte Sensor befindet sich nahe einer Welle der Auswurfrolle 281, die zusammen mit dem mindestens einen Andruckfinger umfassenden Andruckmechanismus 282 am Ausgang der dynamischen Waage angeordnet sind.
Der erste Motor 256 ist - in einer nicht gezeigten Weise -in einem Fach eines Gestells 257 unter dem Wiegeteller 25 angeordnet und wirkt über ein Riemengetriebe (nicht gezeigt) auf jeweils eine erste gutstromeingangsseitig am Wiegeteller angeordnete Umlenkrolle eines jeden Transportriemens. Der erste Motor weist - in einer nicht gezeigten Weise - eine Motorwelle auf, die mit einer Antriebszahnriemenrolle formschlüssig verbunden ist, welche via einen Zahnriemen eine weitere Zahnriemenscheibe antreibt. Diese Antriebsmittel bilden einen gemeinsamen Antrieb für eine Anzahl an angetriebenen Transportriemen. Die weitere Zahnriemenscheibe ist - in einer nicht gezeigten Weise - zusammen mit einem kleinen Zahnrad als eine erste Getriebestufe ausgebildet und drehbar auf einer weiteren feststehenden Achse montiert. Das Gestell 257 ist auf einer Wägezelle 27 montiert. Die letztere ist auf der Bodenplatte 290 des Chassis angeordnet. Ein zweiter Motor 283 ist an der Abzugsvorrichtung angeordnet und treibt - in einer nicht dargestellten Weise - über Zahnriemen und ein Zahnriemenscheibengetriebe die Welle der Auswurfrolle 281 an. Die Abdeckung 255 für einen Breitensensor liegt in einer parallelen Ebene unterhalb des Gestells 257 des Wiegetellers und steigt ab der ausgangsseitigen Kante des Wiegetellers in Transportrichtung allmählich gegenüber der ebenen Bodenplatte 290 nach oben an, vorzugsweise in einer Schräge, so dass ein transportiertes langes flaches Gut, das beispielsweise das B4-Format aufweist, beim Verlassen des zweiten Teilabschnitts II, den dritten Teilabschnitt III des Zuführdecks nicht berührt.
Bei der vereinfachten Ansicht nach Fig. 4a wurden Baugruppen weggelassen:
Eine erste Baugruppe zur Dickenmessung eines zu wiegenden flachen Gutes ist am Anfang eines Transportpfades auf dem Wiegeteller der dynamischen Waage angeordnet (siehe Fig. 10 u. 11). Sie weist als Dickensensor eine Gabellichtschranke auf, die auf dem Transportpfad nachfolgend zu der ersten Lichtschranke LS1 in Transportrichtung x angeordnet ist.
Eine zweite Baugruppe ist zur Breitenmessung des flachen Gutes vorgesehen und weist beispielsweise eine Spindel zur Verstellung der Messposition an der jeweils interessierenden Formatgrenze auf. Das ist erforderlich, da in unterschiedlichen Ländern auch unterschiedliche Format gelten. Sie weist eine Reflexlichtschranke auf, wobei eine lichtreflektieren Fläche an einem Gehäuseteil montiert ist.

Die Fig. 4b zeigt eine vereinfachte schematische Ansicht der Transportvorrichtung der dynamischen Waage mit einer alternativen Abdeckung 255* für einen Breitensensor, die alternativ auf dem Bodenblech 290* montiert worden ist.

Die Fig. 5 zeigt eine perspektivische Darstellung der Abzugsvorrichtung der dynamischen Waage, von vorn rechts oben. Die Auswurfrolle 281 und der mindestens eine Andruckfinger 282 sind in der Halterung 297 am Ausgang der dynamischen Waage angeordnet. Die Halterung 297 hat eine Grundplatte 2970, die auf der Bodenplatte 290 montiert ist. Sie weist außer der Grundplatte 2970, die direkt auf der Bodenplatte montiert ist, wobei sich die Grundplatte 2970 in der y-Richtung erstreckt, auch zwei Abwinkelung 2974, 2975 in z-Richtung auf. Die Auswurfrolle 281 ist auf einer in Gleitlagern 2811, 2812 gelagerten Antriebswelle 280 formschlüssig montiert, wobei die Antriebswelle 280 parallel oder in einem spitzen Winkel von 0,1° bis 1,5° zur y-Richtung angeordnet ist. Die Auswurfrolle 281 hat einen Außenradius RA >> Ru > Rw mit Ru = Radius der Umlenkrollen für die Transportriemen. Der Radius RA der Auswurfrolle 281 abzüglich eines Radius Rw der Antriebswelle der Auswurfrolle 281 definiert den gutstromaufwärts liegenden Bereich an einer Stirnseite der Auswurfrolle, der eine Anordnung des u-förmig gebogenen Halteblechs 2973 für den dritten Sensor S3 ermöglicht. Die Gleitlager 2811, 2812 sind in Öffnungen 29740, 29750 der u-förmig gebogenen Halterung 297 montiert, wobei die beiden Abwinkelungen 2974, 2975, die sich in z-Richtung erstrecken, Seitenschenkel bilden, die zur Gleitlager-Montage vorgesehen sind, so dass die Halterung für die Montage der Auswurfrolle in z-Richtung offen ist. Die Halterung 297 trägt eine Abzugsvorrichtung 28 zum Halten und Auswerfen eines gewogenen flachen Gutes aus der dynamischen Waage. Diese Abzugsvorrichtung besteht aus der Anordnung von der Auswurfrolle und mindestens einem oder einer Anzahl von um eine Achse drehbar gelagerter federnder Andruckfinger. Letztere klemmen das gewogene flache Gut automatisch ein, indem es gegen die Auswurfrolle gedrückt wird, wenn es den Wiegeteller verlässt. Aus der Öffnung 29750 der Abwinkelung 2975 der u-förmig gebogenen Halterung 297 ragt die montierte Antriebswelle 280 in y-Richtung hervor und trägt eine Zahnriemenscheibe 283 für einen Antriebszahnriemen 284.
Die Abwinkelung 2975 erstreckt sich dabei höher in z-Richtung und liegt näher zur Gehäuserückwand 232 angeordnet, als die Abwinkelung 2974. Im Abstand über der Auswurfrolle ist ein u-förmig gebogenes Halteblech 298 für eine feststehende Drehachse 2980 angeordnet, wobei die feststehende Drehachse 2980 parallel oder in einem spitzen Winkel von 0,1° bis 1,5° zur y-Richtung montiert ist und zwei schmale Andruckfinger 2821, 2822 oder mindestens einen Andruckfinger 282 mit einer größeren Breite trägt, die durch eine Blattfeder 2981 mit einer Federkraft beaufschlagt sind.
Die Andruckfinger können in Wirkverbindung mit der Blattfeder 2981 dazu ausgebildet sein, eine zusätzliche Andruckkraft für dicke flache Güter zu erzeugen. Beispielsweise bestehen die Andruckfinger jeweils aus zwei voneinander beabstandeten Seitenwänden, die eine Z-förmig gebogene Gestalt aufweisen. Jeder montierte Andruckfinger hat in z-Richtung mindestens eine Ausbuchtung bei einer ersten Richtungsänderung jedes Z-förmig gebogenen Andruckfingers. Die Ausbuchtung liegt nahe der Drehachse 2980 des Andruckfingers und dem jeweiligen freien Federende der Blattfeder 2981 genau gegenüber. Die Ausbuchtung kann an einer oder an beiden Seitenwänden des Andruckfingers gleich oder unterschiedlich realisiert werden. Die Andruckkraft richtet sich nach der Auslenkung des freien Federendes der montierten Blattfeder 2981 und ist bei der maximalen Ausbuchtung.am größten.
Am freien Ende jedes drehbar gelagerten federnden Andruckfingers ist eine nicht angetriebene Rolle 28211, 28221 zwischen den beiden Seitenwänden des Andruckfingers angeordnet, wobei das flache Gut zwischen den Rollen 28211, 28221 und der Auswurfrolle 281 eingeklemmt und weiter transportiert wird.
Alternativ zu der nicht angetriebenen Rolle kann jeweils ein gleich angetriebenes Förderband verwendet werden, welches der angetriebenen Auswurfrolle 281 gegenübersteht.

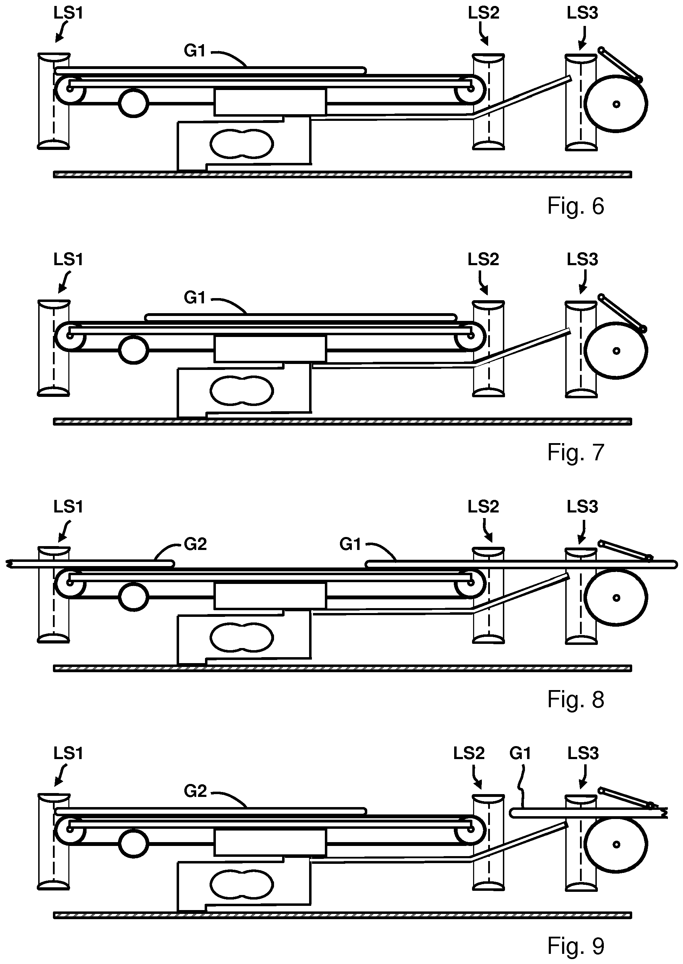

Die Fig. 6 zeigt eine vereinfachte schematische Ansicht der Transportvorrichtung der dynamischen Waage von vorn in einer zweiten Phase bei einem Start des Wiegens eines ersten flachen Gutes G1 mittels der Wägezelle der dynamischen Waage, wenn die erste Lichtschranke LS1 die Hinterkante des ersten flachen Guts G1 detektiert.

Die Fig. 7 zeigt eine vereinfachte schematische Ansicht der Transportvorrichtung von vorn in einer dritten Phase bei Beendigung des Wiegens des ersten flachen Gutes G1 mittels der Wägezelle der dynamischen Waage, bzw. während das flache Gut, beispielsweise ein Standardbrief (US10 oder DIN C6 lang) auf dem Wiegeteller zum Ausgang des erhöhten Bereichs der dynamischen Waage transportiert wird. Im Regelfall wird die Gewichtsmessung vor dem Erreichen der zweiten Lichtschranke LS2 abgeschlossen.
Eine Steuereinheit ist vorgesehen, um beim Detektieren der Vorderkante des ersten flachen Gutes G1 (Standardbriefes) mittels der zweiten Lichtschranke LS2 eine Überprüfung zu veranlassen, ob ein gültiges Gewichtsmessergebnis vorliegt. Wenn kein gültiges Gewichtsmessergebnis vorliegt, wird der Standardbrief mit einer geringeren Geschwindigkeit zum Ausgang der dynamischen Waage weitertransportiert. Die dritte Lichtschranke LS3 dient zur Feststellung, ob die Vorderkante des ersten flachen Gutes G1 (Standardbriefes) die dritte Lichtschranke LS3 erreicht. In diesem Fall wird der Abschluss der Gewichtsmessung eingeleitet. Andernfalls, wenn die Überprüfung ergibt, dass ein gültiges Gewichtsmessergebnis vorliegt, wird das nächste flache Gut dem Eingang der dynamischen Waage zugeführt (Fig. 8).

Die Fig. 8 zeigt eine vereinfachte schematische Ansicht der Transportvorrichtung von vorn in einer vierten Phase vor dem Auswerfen des ersten flachen Gutes G1 nach Beendigung des Wiegens mittels der Wägezelle der dynamischen Waage, während das nächste flache Gut G2 der dynamischen Waage zugeführt wird.

Die Fig. 9 zeigt eine vereinfachte schematische Ansicht der Transportvorrichtung von vorn in einer fünften Phase während des Auswerfens des gewogenen ersten flachen Gutes G1 aus der dynamischen Waage, Es wird ein Zustand gezeigt, bei dem die Gewichtsmessung eines zweiten flachen Gutes G2 beginnen kann und das bereits gewogene erste flache Gut G1 durch die Auswurfrolle aus der Waage herausgefördert wird, ohne dass dadurch die Gewichtsmessung des zweiten flachen Gutes G2 davon beeinflusst wird.

In der Fig. 10 wird in einer perspektivischen Darstellung eine erste Baugruppe 30 zur Dickenmessung eines zu wiegenden flachen Gutes in der dynamischen Waage von vorn gezeigt. Die Dickenmessung erfolgt mittels eines gebremsten Hebels 301, der durch das flache Gut entsprechend der Gutsdicke angehoben werden kann und dabei einen mechanischen Widerstand überwinden muss. Bei abnehmender Gutsdicke (Briefdicke) ist der Widerstand sehr klein und es wirkt hauptsächlich die Schwerkraft auf das Hebelende, an welchem eine Rolle 302 drehbar montiert ist. Kurz vor dem Aufsetzen der Rolle 302 auf den Transportriemen wird der Widerstand wieder erhöht, um das Einkoppeln von Stößen zu verringern und somit evtl. Störimpulse im Gewichtsmess-Signal zu dämpfen. Zu diesem Zweck kann beispielsweise ein dünner Gummireifen auf die Rolle aufmontiert werden. Mit der Bewegung des Hebels 301 wird eine Strichfolie 303 durch einen optischen Sensor 304 bewegt. Dabei wird die Anzahl der Striche gezählt und mit einem bekannten Umrechnungsfaktor die Briefdicke berechnet. Der Hebel wird zwischen zwei flachen Gütern (Briefen) abgesetzt und die in der Fig.10 gezeigte Position wird der Briefdicke "0" zugeordnet. Mit Hilfe des optischen Sensors kann außerdem die Bewegungsrichtung der Strichfolie von einer Steuereinheit der dynamischen Waage erkannt werden.
Ein erster Motor 256 ist unterhalb des Wiegetellers 25 in einem Gestell 257 angeordnet und über ein zweistufiges Getriebe mit der Antriebswelle 2501 der ersten Umlenkrollen 2511, (2521, 2531) der Transportvorrichtung (Fig.3) antriebsmäßig gekoppelt. Das Getriebe erhöht das Motordrehmoment und die Motordrehzahl wird untersetzt. Eine Encoderscheibe 259 ist auf der Motorwelle 2560 des ersten Motors 256 montiert. Ein Encoder 26 ist an der Encoderscheibe angeordnet und mit einer Steuereinheit der dynamischen Waage elektrisch verbunden. Auch der erste Motor 256 ist mit der Steuereinheit der dynamischen Waage elektrisch verbunden, was es erlaubt, die Motordrehzahl entsprechend einem vorgegebenen Sollwert zu regeln. Das Getriebe umfasst je zwei Zahnriemenscheiben mit einem großen Durchmesser und mit einem kleinen Durchmesser. Beispielsweise beträgt am Zahnscheibenrand der große Außendurchmesser d1 = 2,5 cm und der kleine Außendurchmesser d2 = 1,8 cm. Eine Zahnriemenscheibe 2506 mit einem kleinerem Durchmesser hat 25 Zähne und ist auf der Motorwelle 2560 des ersten Motors 256 montiert. Eine Zahnriemenscheibe 2510 mit einem großen Durchmesser hat 36 Zähne. Die Zahnriemenscheibe 2510 und eine Anzahl von ersten Umlenkrollen 2511 (2521, 2531) mit einem kleinerem Durchmesser sind auf der Antriebswelle 2501 (Fig. 3) form- und kraftschlüssig montiert. Die Zahnriemenscheibe 2506 treibt über einen ersten Antriebszahnriemen 2505 eine Zahnriemenscheibe 2507 mit einem großen Durchmesser. Ein zweiter Antriebszahnriemen 2509 läuft auf der Zahnriemenscheibe 2510 und wird von einer Zahnriemenscheibe 2508 mit einem kleinerem Durchmesser (gestichelt gezeichnet) angetrieben, die durch die Zahnriemenscheibe 2507 (großer Durchmesser) in Fig.10 verdeckt ist. Beide Zahnriemenscheiben 2507, 2508 sind mechanisch über eine Drehachse 2504 gekoppelt und Bestandteil des Getriebes. Die Drehachse 2504 ist beidseitig in Gleitlagern 2581, (2582) gelagert, die in je einer Öffnung 25710, (25720) des Gestells poststromeingangsseitig montiert sind.
Der optische Sensor 304 für die Strichfolie 303 ist auf einem Sensorhalteblech 305 montiert, welches auf ein Winkelblech 306 geschraubt ist. Das Winkelblech 306 ist am äußeren Rand 2543 des Kragens 2542 (Fig.3) der Führungswand 254 nahe der gutstromeingangsseitigen Ecke des Wiegetellers 25 montiert, die den maximalen Randabstand B zur Tangente t aufweist (Fig. 3). Dadurch weist die Halterung der ersten Baugruppe 30 den gleichen Winkel wie die Kanten der Transportriemen der Transportvorrichtung auf. Die Achse 300 der Rolle 302 und eine feststehende Achse 307 liegen deshalb parallel zueinander.
Das Winkelblech 306 ist u-förmig in Schwerkraftrichtung (also entgegensetzt zu der z-Richtung) abgewinkelt und ragt über den Rand 2543 des Wiegetellers hinaus, an welchem es befestigt ist. Die Abwinkelungen 3061, (3062) des Winkelblechs 306 weisen jeweils eine kreisförmige Öffnung 30610, (30620) für die feststehende Achse 307 auf, die an dem einem Ende den Hebel 301 und eine Schenkelfeder 308 trägt, welche die Rolle 302 an dem anderen Hebelende gegen den Transportriemen 251 andrückt, solange kein flaches Gut zwischen beide gelangt.
In der Figur 11 ist eine perspektivische Darstellung eines Details der ersten Baugruppe, von vorn, in einer Phase der Dickenmessung eines zu wiegenden flachen Gutes mittels der dynamischen Waage dargestellt. Entsprechend der Dicke des Gutes G1 erfolgt eine Bewegung des Hebelendes des Hebels 301, wodurch die Strichfolie 303 bewegt wird. Diese Phase liegt zwischen der ersten Arbeitsphase 1 (Fig. 4) und der zweiten Arbeitsphase 2 (Fig. 6).

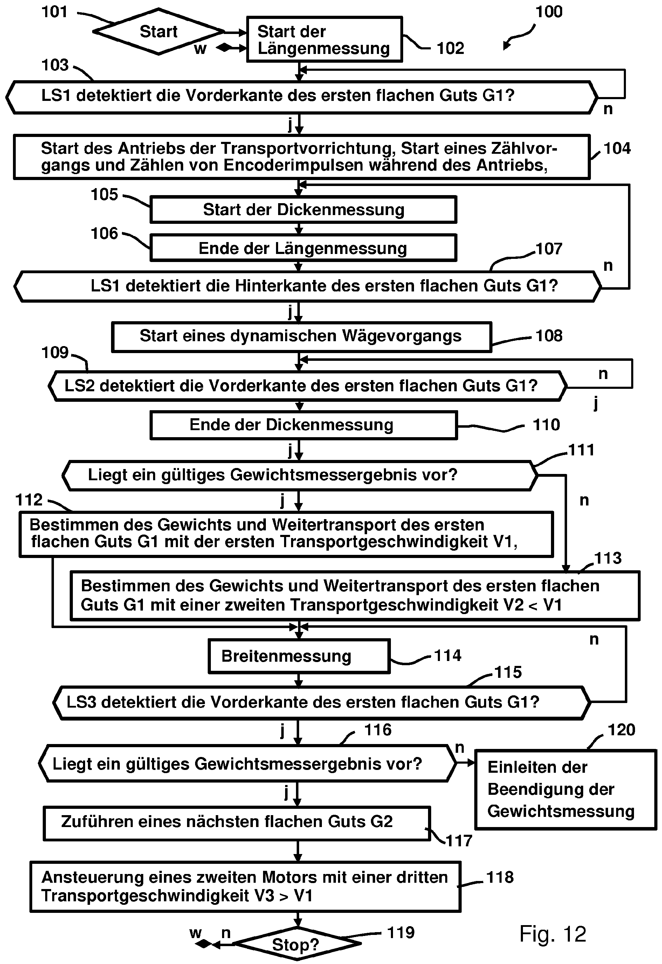

Die Figur 12 zeigt einen vereinfachten schematischen Ablaufplan 100 für ein Steuerungsverfahren der dynamischen Waage und umfasst die Schritte:
a) Durch die Steuereinheit wird eine Längenmessung gestartet und danach der Antrieb der am Wiegeteller angeordneten Transportbänder der Transportvorrichtung mit einer ersten Transportgeschwindigkeit V1 gestartet, wobei der Start eines Zählvorgangs und ein Zählen von Encoderimpulsen während des Antriebs erfolgt, nachdem die erste Lichtschranke LS1 die Vorderkante des ersten flachen Guts G1 detektiert (Block 101 bis 104), anschließend wird eine Dickenmessung (Block 105) gestartet und solange durchführt, während das flache Gut entlang eines Wegabschnitts des Transportpfades (T) transportiert wird, bis die erste Lichtschranke LS1 am Eingang eines Wiegetellers die Hinterkante des ersten flachen Guts G1 detektiert (Block 107), wobei die Längenmessung während des Wegabschnitts beendet wird (Block 106),
b) Start eines dynamischen Wägevorgangs (Block 108), bis die zweite Lichtschranke LS2 am Ausgang eines Wiegetellers die Vorderkante des ersten flachen Guts G1 detektiert (Block 109) und Beenden der Dickenmessung (Block 110),
c) Überprüfen, ob ein gültiges Gewichtsmessergebnis vorliegt (Block 111),
d) Bestimmen des Gewichts des ersten flachen Guts G1 und Weitertransport des ersten flachen Guts G1 mit der ersten Transportgeschwindigkeit V1 in Transportrichtung x zum Ausgang der dynamischen Waage (Block 112), wenn ein gültiges Gewichtsmessergebnis vorliegt,
e) Bestimmen des Gewichts des ersten flachen Guts G1, wenn der Wägevorgang nicht beendet ist, und Weitertransport des ersten flachen Guts G1 mit einer zweiten Transportgeschwindigkeit V2 in Transportrichtung x zum Ausgang der dynamischen Waage, wobei die zweiten Transportgeschwindigkeit V2 kleiner ist, als die erste Transportgeschwindigkeit V1 (Block 113),
f) Durchführung einer Breitenmessung des flachen Guts (Block 114),
g) Einleiten der Beendigung der Gewichtsmessung während des dynamischen Wägevorgangs (Block 120), wenn die dritte Lichtschranke LS3 am Eingang einer Abzugsvorrichtung der dynamischen Waage die Vorderkante des ersten flachen Guts G1 detektiert (Block 115) und die Überprüfung (Block 116) ergibt, dass kein gültiges Gewichtsmessergebnis vorliegt und
h) Zuführen eines nächsten flachen Guts G2 dem Eingang der dynamischen Waage, wenn die Überprüfung ergibt, dass ein gültiges Gewichtsmessergebnis vorliegt (Block 117) und
i) Weitersteuerung der Wiegeeinheit und Ansteuerung eines zweiten Motors mit einer dritten Transportgeschwindigkeit in Transportrichtung x, wobei der Motor eine Auswurfrolle antreibt, die zum Auswurf des flachen Guts G1 in der Abzugsvorrichtung angeordnet ist, wobei die dritte Transportgeschwindigkeit V3 größer ist, als die erste Transportgeschwindigkeit V1 (Block 118) sowie
k) Rückverzweigung (w) und Wiederholung (Block 119) der Routine (100), falls kein Stop-Befehl gegeben wurde.

Ein technisches Verfahren zur Bestimmen der Länge des flachen Guts kann dem Steuerungsverfahren der dynamischen Waage vorangestellt sein und enthält mindestens die Verfahrensschritte:
j) Start eines Zählvorgangs von Encoderimpulsen eines Antriebsmotors einer ersten Station, wenn die externe Lichtschranke ELS die Hinterkante des ersten flachen Guts G1 detektiert.
jj) Beendigung des Zählvorgangs von Encoderimpulsen, wenn der interne erste Sensor einer zweiten Station dem Mikroprozessor der Steuereinheit der zweiten Station die Vorderkante des flachen Guts meldet.
jjj) Bestimmen der Länge des flachen Guts durch den Mikroprozessor der Steuereinheit der zweiten Station.

Beispielsweise ist als erste Station eine automatische Vereinzelungs- und Zuführstation und als zweite Station die dynamische Waage gemeint. Ein Computerprogramm ermöglicht der Steuereinheit der dynamischen Waage eine entsprechende Datenverarbeitung. Die Sensor- und Encodersignale der dynamischen Waage werden durch die Steuereinheit der dynamischen Waage abgefragt, was im Steuerungsverfahren der dynamischen Waage vereinfacht dargestellt wurde. Es ist außerdem ein computerlesbares Speichermedium vorgesehen, auf dem Programmcode gespeichert ist, der es der Steuereinheit ermöglicht, nachdem er in Speichermittel der Steuereinheit geladen worden ist, ein mindestens Verfahren zum Steuern der dynamischen Waage in einer vorbestimmten zeitlichen Reihenfolge durchzuführen.

Vorteilhaft ist eine Dimensionsmessung aller drei Dimensionen (Länge, Breite und Dicke) auch während des Transports und einer Verarbeitung der flachen Güter möglich. Der erste Sensor S1 ist ein Bestandteil eines Mittels zur Bestimmung der Länge eines flachen Guts, wobei dieser Bestandteil des Mittels innerhalb der dynamischen Waage (in der Station 2) angeordnet ist und wobei mindestens ein weiterer Bestandteil des vorgenannten Mittels außerhalb der dynamischen Waage (in der Station 1) vorgesehen ist.

Der mindestens eine weitere Bestandteil umfasst einen Sensor der einen Lichtstärkewechsel von dunkel zu hell detektiert, aus dem beispielsweise ein Mikroprozessor der Steuereinheit die Hinterkante des flachen Guts feststellt, wenn dem Mikroprozessor dieser Lichtstärkewechsel von dem externen Sensor signalisiert wird. Wenn somit der externe Sensor dem Mikroprozessor die Hinterkante des flachen Guts meldet, beginnt ein Zählvorgang von Encoderimpulsen, welcher beendet wird, wenn der interne erste Sensor dem Mikroprozessor der Steuereinheit die Vorderkante des flachen Guts meldet. Bei einem bekannten Abstand zwischen dem externen und dem internen ersten Sensor kann der Mikroprozessor der Steuereinheit der dynamischen Waage die Länge des flachen Guts ermitteln.

In einem weiteren nicht näher erläuterten Ausführungsbeispiel ist eine Station in dem Transportpfad vor der dynamischen Waage angeordnet. Diese Station weist einen Sensor auf, der zur Längenmessung ein Signal abgibt, wenn die Vorderkante und/oder die Hinterkante eines flachen Guts den Längensensor erreicht und verlässt. Eine Steuereinheit der dynamischen Waage ist mit dem ersten Sensor und einem ersten Encoder der dynamischen Waage über eine Schnittstelle mit dem Längensensor der vorangestellten Station und mit einem Encoder des Antriebsmotors eines der dynamischen Waage vorangestellten Station elektrisch verbunden, um die Encodersignale und die Signale des externen Sensors Längenmessung sowie die des ersten Sensors der dynamischen Waage auszuwerten, um die Länge des der dynamischen Waage zugeführten flachen Gutes zu ermitteln. Das Mittel zur Bestimmung der Länge eines flachen Guts umfasst also auch hier den ersten Sensor der dynamischen Waage und deren Steuereinheit.

Alternativ kann auch ein Mikroprozessor einer Steuereinheit der ersten Station 1 die Länge des flachen Guts ermitteln, wenn das Ergebnis der Längenermittlung anschließend zu der dynamischen Waage übermittelt wird, wobei an der Bestimmung der Länge auch der erste Sensor der dynamischen Waage beteiligt ist. Aufgrund des ersten Sensors erfolgt auch bei diesem Ausführungsbeispiel die Bestimmung der Länge teilweise innerhalb der dynamischen Waage.

Die Dimensionsmessung der Breite und Dicke erfolgt nach der bevorzugten ersten Ausführungsvariante mit der einer Baugruppe (Fig. 10) und einer weiteren Baugruppe mit einem Breitensensor LSB* (Fig.4b) und vollständig innerhalb der dynamischen Waage im Unterschied zu dem oben genannten Mittel zur Bestimmung der Länge eines flachen Guts, welches nur teilweise innerhalb der dynamischen Waage angeordnet ist.

Alternativ kann in einer anderen Ausführungsvariante eine Bestimmung aller drei Dimensionen des flachen Guts vollständig innerhalb der dynamischen Waage vorgenommen werden, indem der erste Sensor die Vorderkante und die Hinterkante des flachen Guts detektiert und die Encoderimpulse gezählt werden, die zwischen dem Feststellen der Vorderkante und der Hinterkante des flachen Guts vorkommen.

Wenn im vorliegenden Beispiel eine bestimmte Ausführungsform, nämlich bevorzugt eine dynamischen Waage nach einer ersten Variante näher erläutert wurde, soll aber dadurch nicht eine andere Ausführungsform nach einer weiteren Variante vom Schutzumfang ausgeschlossen werden, die - vom gleichen Grundgedanken der Erfindung ausgehend - eingesetzt werden kann und von den anliegenden Schutzansprüchen umfasst wird.

## Patentansprüche

1. Dynamische Waage aufweisend eine eingangsseitige erste Baugruppe zur Dickenmessung, eine Transportvorrichtung mit an einem Wiegeteller angeordneten Transportriemen, Sensoren, Encoder und eine zweite Baugruppe zur Bestimmung der Breite des Gutes mit einem Breitensensor, eine ausgangsseitige Abzugsvorrichtung mit einer Auswurfrolle sowie eine Steuereinheit, die mit den vorgenannten Baugruppen zu deren Steuerung kommunikativ verbunden ist, mit einem ersten Sensor (S1) am Eingang und einem zweiten Sensor (S2) am Ausgang des Wiegetellers, wobei die Steuereinheit programmiert ist,
- eine Längenmessung, eine Dickenmessung und den Antrieb der am Wiegeteller angeordneten Transportriemen der Transportvorrichtung mit einer ersten Transportgeschwindigkeit (V1) zu starten, wenn ein erster Sensor (S1) die Vorderkante eines ersten flachen Guts G1 detektiert,
- zum Start und zur Durchführung eines dynamischen Wägevorgangs solange, bis der zweite Sensor (S2) am Ausgang des Wiegetellers die Vorderkante des ersten flachen Guts (G1) detektiert und die Dickenmessung beendet wird,
- zum Überprüfen, ob ein gültiges Gewichtsmessergebnis vorliegt,
- zum Bestimmen des Gewichts des ersten flachen Guts (G1) und Weitertransport des ersten flachen Guts (G1) mit der ersten Transportgeschwindigkeit (V1) in Transportrichtung x zum Ausgang der dynamischen Waage, wenn ein gültiges Gewichtsmessergebnis vorliegt,
- zum Bestimmen des Gewichts des ersten flachen Guts (G1), wenn der Wägevorgang nicht beendet ist, weil kein gültiges Gewichtsmessergebnis vorliegt, und zum Weitertransport des ersten flachen Guts (G1) mit einer zweiten Transportgeschwindigkeit (V2) in Transportrichtung x zum Ausgang der dynamischen Waage, wobei die zweiten Transportgeschwindigkeit (V2) kleiner ist, als die erste Transportgeschwindigkeit (V1),
- zur Durchführung einer Breitenmessung des flachen Guts,
- zum Einleiten der Beendigung der Gewichtsmessung während des dynamischen Wägevorgangs, wenn ein dritter Sensor (S3) am Eingang einer Abzugsvorrichtung der dynamischen Waage die Vorderkante des ersten flachen Guts (G1) detektiert und eine Überprüfung ergibt, dass kein gültiges Gewichtsmessergebnis vorliegt und
- zum Zuführen eines nächsten flachen Guts (G2) dem Eingang der dynamischen Waage, wenn die Überprüfung ergibt, dass ein gültiges Gewichtsmessergebnis vorliegt und
- zur Weiteransteuerung des Antriebes der Transportriemen der Wiegeeinheit mit der ersten Transportgeschwindigkeit (V1) und Ansteuerung eines zweiten Motors mit einer dritten Transportgeschwindigkeit (V3) in Transportrichtung x, wobei der Motor eine Auswurfrolle antreibt, die zum Auswurf des flachen Guts (G1) in der Abzugsvorrichtung angeordnet ist, wobei die dritte Transportgeschwindigkeit (V3) größer ist, als die erste Transportgeschwindigkeit (V1) sowie
- zur Rückverzweigung (w) und Wiederholung der Routine, falls kein Stop-Befehl gegeben wurde.

2. Dynamische Waage, nach Anspruch 1, **gekennzeichnet dadurch, dass** der Wiegeteller (25) eine Führungswand (254) und das ein auf der Seite liegend zu transportierendes flaches Gut (G) durch die Transportvorrichtung während des Wiegens in Transportrichtung x eines kartesischen Koordinatensystems transportiert wird, dass die dynamische Waage mit einem Zuführdeck (24) parallel zu einer x-/y-Ebene sowie eine Abzugsvorrichtung (28) aufweist, die mit einem Andruckmechanismus (282) ausgestattet ist, das die Sensoren und Motoren mit der Steuereinheit der dynamischen Waage elektrisch verbunden sind, wobei ein erster Motor (256) zum Antrieb der Transportvorrichtung und ein zweiter Motor (283) zum Antrieb der Abzugsvorrichtung vorgesehen ist, die nahe an dem Ausgang der dynamischen Waage angeordnet ist.

3. Dynamische Waage, nach den Ansprüchen 1 bis 2, **gekennzeichnet dadurch, dass** der Wiegeteller (25) eine trapezförmige Grundfläche mit zwei nicht parallelen Seitenschenkeln aufweist, wobei einer von den nicht parallelen Seitenschenkeln an die Führungswand (254) des Wiegetellers stößt und zusammen mit der Führungswand einen Längsrand ausbildet, dass eine Abdeckung (255) für einen Breitensensor dem Wiegeteller (25) in Transportrichtung nachfolgt, dass eine Öffnung für einen zweiten Sensor (S2) in der Abdeckung (255) und dass Öffnungen für die Sensoren (S1) und (S3) im Zuführdeck (24) vorgesehen sind und dass Mittel zur Bestimmung der drei Dimensionen des flachen Guts vollständig oder teilweise innerhalb der dynamischen Waage angeordnet sind.

4. Dynamische Waage, nach den Ansprüchen 1 bis 3, **gekennzeichnet dadurch, dass** der jeweils größere von zwei parallelen Seitenschenkeln der trapezförmigen Grundfläche einen Querrand bildet, der gutstromeingangsseitig der dynamischen Waage angeordnet ist, dass das Zuführdeck (24) aus einem gutstromeingangsseitigen ersten Teilabschnitt (I) und einem gutstromausgangsseitigen vierten Teilabschnitt (IV) besteht, die durch einen zweiten Abschnitt (II) und dritten Abschnitt (III) voneinander getrennt sind, wobei in dem zweiten Abschnitt (II) der Wiegeteller (25) angeordnet ist und im dritten Abschnitt (III) die Abdeckung (255) für einen Breitensensors an dem Wiegeteller montiert ist, dass eine durch den zweite Motor (283) angetriebene Auswurfrolle (281) der Abzugsvorrichtung durch eine Öffnung im vierten Teilabschnitt (IV) des Zuführdecks (24) in z-Richtung hindurchragt und dass die Mittel zur Bestimmung von zweien der drei Dimensionen des flachen Guts vollständig und nur ein Mittel zur Bestimmung einer der drei Dimensionen des flachen Guts teilweise innerhalb der dynamischen Waage angeordnet sind.

5. Dynamische Waage, nach den Ansprüchen 1 bis 4, **gekennzeichnet dadurch, dass** ein Mittel zur Bestimmung der Länge und ein Mittel zur Bestimmung der Dicke eines flachen Guts am Eingang der dynamischen Waage vorgesehen ist,
- dass ein Metallwinkelblech (291) in y-Richtung von der Führungswand (254) des Wiegetellers beabstandet angeordnet und auf einer ebenen Bodenplatte (290) eines Chassis (29) der dynamischen Waage montiert ist, dass ein maximaler Blechwandabstand (A) zwischen einer Stelle an einer Rückwand (232) einer Gehäuseunterschale (23) der dynamischen Waage und einer nach oben abgewinkelten Blechwand (292) des Metallwinkelblechs (291) vorgesehen ist,
- dass ein Kragen (2542) in y-Richtung von oberen Kante der Führungswand (254) abgewinkelt und ein äußerer Rand (2543) an dem Kragen (2542) vorgesehen ist,
- dass eine gutstromeingangsseitige Ecke am äußeren Rand (2543) des Kragens in einem maximalen Randabstand (B) zu einer virtuellen Tangente (t) vorgesehen ist, wobei die Tangente, die an der in y-Richtung entferntesten Stelle der Gehäuserückwand (232) als angelegt betrachtet wird, sich parallel zu der Transportrichtung x erstreckt,
- dass eine Ausrichtwand (20) den gutstromeingangsseitigen ersten Teilabschnitt (I) in y-Richtung des kartesischen Koordinatensystems begrenzt und in einem gutstromeingangsseitigen Abstand (C) von der Tangente (t) entfernt angeordnet ist,
- dass eine Ausrichtwand (21) den gutstromausgangsseitigen vierten Teilabschnitt (IV) in y-Richtung des kartesischen Koordinatensystems begrenzt und in einem gutstromausgangsseitigen Abstand (D) von der Tangente t entfernt angeordnet ist, wobei für die Abstände A < B < C ≤ D gilt,
- dass eine Öffnung für einen ersten Sensor (S1) im ersten Teilabschnitt (I) des Zuführdecks (24) und unmittelbar benachbart zu der Führungswand (254) des Wiegetellers (25) vorgesehen ist,
- dass eine Öffnung für einen zweiten Sensor (S2) in der Abdeckung (255) und dass eine Öffnung im einen dritten Sensor (S3) im vierten Teilabschnitt des Zuführdecks (24) vorgesehen sind, dass der zweite Sensor (S2) in Transportrichtung x in einem ersten Abstand (L1) von dem ersten Sensor (S1) angeordnet ist und dass der dritte Sensor (S3) der Ausrichtwand (21) im vierten Teilabschnitt (IV) unmittelbar benachbart und in einem zweiten Abstand (L2) von dem zweiten Sensor (S2) angeordnet ist sowie
- dass die Abzugsvorrichtung (28) auf einer Bodenplatte (290) eines Chassis (29) angeordnet ist, wobei einer Auswurfrolle (281) der Abzugsvorrichtung mindestens ein Andruckfinger (2821, 2822) des Andruckmechanismus (282) gegenübersteht,
- dass der erste Motor (256) der Transportvorrichtung in einem Gestell (257) unterhalb des Wiegetellers (25) montiert ist und den mindestens einen Transportriemen (251, 252, 253) antreibt, die auf dem Wiegetellers (25) angeordnet sind,
- dass eine Antriebswelle (2501) der ersten Umlenkrollen (2511, 2521, 2531) und eine nicht angetriebene Welle (2502) der zweiten Umlenkrollen (2512, 2522, 2532) des mindestens einen Transportriemens (251, 252, 253) in einem spitzen Winkel von 0,1° bis 1,5° zur y-Richtung angeordnet sind, sowie
- dass eine Antriebswelle (280) der Auswurfrolle (281) parallel oder in einem spitzen Winkel von 0,1° bis 1,5° zur y-Richtung angeordnet ist.

6. Dynamische Waage, nach den Ansprüchen 1 bis 5, **gekennzeichnet dadurch, dass** der erste Sensor (S1) ein Bestandteil des Mittels zur Bestimmung der Länge eines flachen Guts ist, wobei dieser Bestandteil des Mittels innerhalb der dynamischen Waage angeordnet ist.

7. Dynamische Waage, nach den Ansprüchen 1 bis 6, **gekennzeichnet dadurch, dass** der Start eines Zählvorgangs und ein Zählen von Encoderimpulsen während des Antriebs der am Wiegeteller angeordneten Transportriemen erfolgt, nachdem der erste Sensor (S1) die Vorderkante des ersten flachen Guts (G1) detektiert hat, wobei die Steuereinheit anschließend eine Dickenmessung startet und solange durchführt, während das flache Gut entlang eines Wegabschnitts des Transportpfades (T) transportiert wird, bis der erste Sensor (S1) am Eingang eines Wiegetellers die Hinterkante des ersten flachen Guts (G1) detektiert, wobei die Längenmessung beendet wird.

8. Dynamische Waage, nach den Ansprüchen 1 bis 6, **gekennzeichnet dadurch, dass** mindestens ein weiterer Bestandteil des vorgenannten Mittels zur Bestimmung der Länge eines flachen Guts außerhalb der dynamischen Waage vorgesehen ist.

9. Dynamische Waage, nach den Ansprüchen 1 bis 6, **gekennzeichnet dadurch, dass** die Sensoren (S1, S2, S3) als Durchlichtschranken ausgebildet sind.

10. Dynamische Waage, nach den Ansprüchen 1 bis 6 und 9, **gekennzeichnet dadurch, dass**
- die Sender-/Empfänger-Bauteile der ersten Lichtschranke (LS1) in einem Halteblech (296) montiert und am Beginn eines Transportpfades (T) unmittelbar vor den ersten Umlenkrollen der Transportriemen des Wiegetellers (25) und
- die Sender-/Empfänger-Bauteile der zweiten Lichtschranke (LS2) in einem Halteblech (2972) montiert und an dem Transportpfad (T) unmittelbar nach den Umlenkrollen der Transportriemen des Wiegetellers (25) sowie
- die Sender-/Empfänger-Bauteile der dritten Lichtschranke (LS3) in einem Halteblech (2973) montiert und an dem Transportpfad (T) unmittelbar vor der Auswurfrolle (281) angeordnet sind.

11. Dynamische Waage, nach den Ansprüchen 1 bis 6 sowie 9 und 10, **gekennzeichnet dadurch, dass** die Auswurfrolle (281) auf einer in Gleitlagern (2811, 2812) gelagerten Antriebswelle (280) formschlüssig montiert ist, dass die Auswurfrolle (281) einen Außenradius (RA) aufweist, der viel größer als ein Radius (RU) der Umlenkrollen für die Transportriemen und größer als ein Radius (Rw) der Antriebswelle (280) der Auswurfrolle (281) ist, wobei der Radius (RA) der Auswurfrolle (281) abzüglich des Radius (Rw) der Antriebswelle (280) der Auswurfrolle (281) einen gutstromaufwärts liegenden Bereich an einer Stirnseite der Auswurfrolle definiert, der eine Anordnung des u-förmig gebogenen Halteblechs (2973) für den dritten Sensor (S3) ermöglicht.

12. Dynamische Waage, nach den Ansprüchen 1 und 2, **gekennzeichnet dadurch, dass** die Transportriemen (251, 252, 253) auf dem Wiegeteller (25) so angeordnet sind, dass sich gutstromeingangsseitig auf dem Wiegeteller (25) ein erster Transportriemenabstand zur Führungswand (254) des Wiegetellers in y-Richtung ergibt, der größer als ein zweiter Transportriemenabstand ist, der in Transportrichtung x parallel verschoben als Abstand zur Führungswand (254) gemessen wird.

13. Dynamische Waage, nach Anspruch 5, **gekennzeichnet dadurch, dass** eine ersten Baugruppe (30) zur Dickenmessung eines zu wiegenden flachen Gutes in der dynamischen Waage vorgesehen ist, deren Halterung am äußeren Rand (2543) des Kragens (2542) nahe der gutstromeingangsseitigen Ecke des Wiegetellers (25) montiert ist, wobei die Ecke den maximalen Randabstand (B) zur Tangente (t) aufweist.

14. Dynamische Waage, nach den Ansprüchen 1 und 13, **gekennzeichnet dadurch, dass** die Längskanten der Transportriemen (251, 252, 253) auf dem Wiegeteller (25) parallel zueinander und parallel zum Rand (2543) des Kragens (2542) der Führungswand (254) angeordnet sind.

15. Dynamische Waage, nach den Ansprüchen 1, 3 und 5, **gekennzeichnet dadurch, dass** die Abdeckung (255) für einen Breitensensor in einer parallelen Ebene unterhalb des Gestells (257) des Wiegetellers liegt und ab der ausgangsseitigen Kante des Wiegetellers in Transportrichtung allmählich gegenüber der ebenen Bodenplatte (290) nach oben in einer Schräge ansteigt, so dass ein transportiertes langes flaches Gut, beim Verlassen des zweiten Teilabschnitts (II), den dritten Teilabschnitt (III) des Zuführdecks nicht berührt.

16. Dynamische Waage, nach den Ansprüchen 1 und 3, **gekennzeichnet dadurch, dass** die Abdeckung (255*) für einen Breitensensor (LSB*) auf dem Bodenblech (290*) montiert ist und in einer parallelen Ebene unterhalb des Wiegetellers liegt und ab der ausgangsseitigen Kante des Wiegetellers in Transportrichtung allmählich gegenüber der ebenen Bodenplatte (290) nach oben in einer Schräge ansteigt, so dass ein transportiertes langes flaches Gut, beim Verlassen des zweiten Teilabschnitts (II), den dritten Teilabschnitt (III) des Zuführdecks nicht berührt.

17. Steuerungsverfahren der dynamischen Waage umfassend die Schritte:
a) Start einer Längenmessung durch die Steuereinheit und danach Start des Antriebs der am Wiegeteller angeordneten Transportriemen der Transportvorrichtung mit einer ersten Transportgeschwindigkeit (V1), wenn ein erster Sensor (S1) die Vorderkante eines ersten flachen Guts (G1) detektiert,
b) Start eines dynamischen Wägevorgangs, bis ein zweiter Sensor (S2) am Ausgang eines Wiegetellers die Vorderkante des ersten flachen Guts (G1) detektiert und Beenden der Dickenmessung,
c) Überprüfen, ob ein gültiges Gewichtsmessergebnis vorliegt,
d) Bestimmen des Gewichts des ersten flachen Guts (G1) und Weitertransport des ersten flachen Guts (G1) mit der ersten Transportgeschwindigkeit (V1) in Transportrichtung x zum Ausgang der dynamischen Waage, wenn ein gültiges Gewichtsmessergebnis vorliegt,
e) Bestimmen des Gewichts des ersten flachen Guts (G1), wenn der Wägevorgang nicht beendet ist, und Weitertransport des ersten flachen Guts (G1) mit einer zweiten Transportgeschwindigkeit (V2) in Transportrichtung x zum Ausgang der dynamischen Waage, wobei die zweiten Transportgeschwindigkeit (V2) kleiner ist, als die erste Transportgeschwindigkeit (V1),
f) Durchführung einer Breitenmessung des flachen Guts,
g) Einleiten der Beendigung der Gewichtsmessung während des dynamischen Wägevorgangs, wenn ein dritter Sensor (S3) am Eingang einer Abzugsvorrichtung der dynamischen Waage die Vorderkante des ersten flachen Guts (G1) detektiert und die Überprüfung ergibt, dass kein gültiges Gewichtsmessergebnis vorliegt und
h) Zuführen eines nächsten flachen Guts (G2) dem Eingang der dynamischen Waage, wenn die Überprüfung ergibt, dass ein gültiges Gewichtsmessergebnis vorliegt und
i) Weitersteuerung der Wiegeeinheit und Ansteuerung eines zweiten Motors mit einer dritten Transportgeschwindigkeit in Transportrichtung x, wobei der Motor eine Auswurfrolle antreibt, die zum Auswurf des flachen Guts (G1) in der Abzugsvorrichtung angeordnet ist, wobei die dritte Transportgeschwindigkeit (V3) größer ist, als die erste Transportgeschwindigkeit (V1) sowie
k) Rückverzweigung (w) und Wiederholung der Routine (100), falls kein Stop-Befehl gegeben wurde.

18. Steuerungsverfahren nach Anspruch 17, **gekennzeichnet dadurch, dass** die Sensoren (S1, S2, S3) als Lichtschranken (LS1, LS2, LS3) ausgebildet sind und dass der Start eines Zählvorgangs und ein Zählen von Encoderimpulsen während des Antriebs der am Wiegeteller angeordneten Transportriemen erfolgt, nachdem die erste Lichtschranke (LS1) die Vorderkante des ersten flachen Guts (G1) detektiert, anschließend wird eine Dickenmessung gestartet und solange durchführt, während das flache Gut entlang eines Wegabschnitts des Transportpfades (T) transportiert wird, bis die erste Lichtschranke (LS1) am Eingang eines Wiegetellers die Hinterkante des ersten flachen Guts (G1) detektiert, wobei die Längenmessung während des Wegabschnitts beendet wird.

## Claims

1. The dynamic scale has an input-side first assembly for thickness measurement, a transport device having transport belts arranged on a weighing plate, sensors, encoders; and a second assembly for determining the width of the good with a width sensor, an output side takeoff device having an ejection roller, and a control unit that is connected in terms of communication with the aforementioned assemblies for their control, having a first sensor (S1) at the input and a second sensor (S2) at the output of the weighing plate, wherein the control unit is programmed
- to start a length measurement and a thickness measurement and the driving of the transport belts of the transport device with a first transport velocity (V1), said transport belts being arranged on the weighing plate, if a first sensor (S1) detects the leading edge of a first flat good G1,
- to start and implement a dynamic weighing process as long as the second sensor (S2) detects the leading edge of the first flat good (G1) at the output of the weighing plate, and the thickness measurement is ended,
- to check whether a valid weight measurement result is present,
- to determine the weight of the first flat good (G1) and further transport said first flat good (G1) with the first transport velocity (V1) in the transport direction x to the output of the dynamic scale if a valid weight measurement result is present,
- to determine the weight of the first flat good (G1) if the weighing process has not ended because no valid weight measurement result is present, and to further transport the first flat good (G1) with a second transport velocity (V2) in the transport direction x to the output of the dynamic scale, wherein the second transport velocity (V2) is lower than the first transport velocity (V1),
- to implement a width measurement of the flat good,
- to initiate the end of the weight measurement during the dynamic weighing process if a third sensor (S3) at the input of a takeoff device of the dynamic scale detects the leading edge of the first flat good (G1) and a check yields that no valid weight measurement result is present, and
- to supply a next flat good (G2) to the input of the dynamic scale if the check yields that a valid weight measurement result is present, and
- to further control the drive of the transport belts of the weighing unit with the first transport velocity (V1), and activate a second motor with a third transport velocity (V3) in the transport direction x, wherein the motor drives an ejection roller that is arranged to eject the flat good (G1) in the takeoff device, wherein the third transport velocity (V3) is greater than the first transport velocity (V1), and
- to branch back (w) and repeat the routine in the event that no stop command has been given.

2. Dynamic scale according to claim 1, **characterized in that** the weighing plate (25) has a guide wall (254), and that a flat good (G) to be transported lying on its side is transported through the transport device in the transport direction x of a Cartesian coordinate system during the weighing; **in that** the dynamic scale has a supply deck (24) that is parallel to an x/y-plane, as well as a takeoff device (28) that is equipped with a contact pressure mechanism (282) wherein the sensors and motors are electrically connected with the control unit of the dynamic scale, wherein a first motor (256) is provided to drive the takeoff device, and a second motor (283) is provided to drive the takeoff device, which is arranged near the output of the dynamic scale.

3. Dynamic scale according to claims 1 through 2, **characterized in that** the weighing plate (25) has a trapezoidal footprint with two non-parallel lateral sides, wherein one of the non-parallel lateral sides adjoins the guide wall (254) of the weighing plate and, together with the guide wall, forms a longitudinal edge; **in that** a covering (255) for a width sensors follows after the weighing plate (25) in the transport direction; **in that** an opening for a second sensor (S2) is provided in the covering (255); and **in that** openings for the sensors (S1) and (S3) are provided in the supply deck (24); and **in that** means to determine the three dimensions of the flat good are arranged entirely or partially within the dynamic scale.

4. Dynamic scale according to claims 1 through 3, **characterized in that** the respective larger of two parallel lateral sides of the trapezoidal footprint forms a transversal edge that is arranged at the input side in terms of the flow of goods; **in that** the supply deck (24) is comprised of a first subsection (I) at the input side, in terms of the flow of goods, and a fourth subsection (IV) at the output side, in terms of the flow of goods, which subsections (I) and (IV) are separated from one another by a second section (II) and third section (III); wherein the weighing plate (25) is arranged in the second section (II), and the covering (255) for a width sensor is installed in the third section (III); **in that** an ejection roller (281) of the takeoff device that is driven by the second motor (283) projects in the z-direction through an opening in the fourth subsection (IV) of the supply deck (24); and **in that** the means for determining two of the three dimensions of the flat good are arranged entirely within the dynamic scale, and only a means for determining one of the three dimensions of the flat good is arranged partially within the dynamic scale.

5. Dynamic scale according to claims 1 through 4, **characterized in that** a means to determine the length and a means to determine the thickness of a flat good are provided at the input of the dynamic scale,
- **in that** a metal angle plate (291) is arranged at a distance in the y-direction from the guide wall (254) of the weighing plate and is installed on a flat floor plate (290) of a chassis (29) of the dynamic scale; **in that** a maximum sheet wall distance (A) is provided between a location on a rear wall (232) of a lower housing shell (23) of the dynamic scale and a sheet wall (292) of the metal angle plate (291), said sheet wall (292) being bent upward,
- **in that** a collar (2542) is bent upward in the y-direction from the upper edge of the guide wall (254), and an outer edge (2543) is provided at the collar (2542),
- **in that** a corner at the input side in terms of the flow of goods, at the outer edge (2543) of the collar, is provided at a maximum edge distance (B) from a virtual tangent (t), wherein the tangent, which is considered to be placed at the location of the rear housing wall (232) that is furthest distant in the y-direction, extends parallel to the transport direction x,
- **in that** an alignment wall (20) bounds the first subsection (I), at the input side in terms of the flow of goods, in the y-direction of the Cartesian coordinate system, and is arranged at a distance (C) from the tangent (t) at the input side, in terms of the flow of goods,
- **in that** an alignment wall (21) bounds the fourth subsection (IV) in the y-direction of the Cartesian coordinate system, at the output side in terms of a flow of goods, and is arranged at a distance (D) from the tangent t at the output side in terms of a flow of goods, wherein A < B < C ≤ D applies for the distances,
- **in that** an opening for a first sensor (S1) is provided in the first subsection (I) of the supply deck (24), and immediately adjacent to the guide wall (254) of the weighing plate (25),
- **in that** an opening for a second sensor (S2) is provided in the covering (255), and **in that** an opening for a third sensor (S3) is provided in the fourth subsection of the supply deck (24); **in that** the second sensor (S2) is arranged at a first distance (L1) from the first sensor (S1) in the transport direction x; and **in that** the third sensor (S3) is arranged immediately adjacent to the alignment wall (21) in the fourth subsection (IV), and at a second distance (L2) from the second sensor (S2), and
- **in that** the takeoff device (28) is arranged on a floor plate (290) of a chassis (29), wherein an ejection roller (281) of the takeoff device is situated opposite at least one contact pressure finger (2821, 2822) of the contact pressure mechanism (282),
- **in that** the first motor (256) of the transport device is installed in a frame (257) below the weighing plate (25) and drives the at least one transport belt (251, 252, 253) that are arranged on the weighing plate (25),
- a (2501) of the first deflection rollers (2511, 2521, 2531) and an undriven shaft (2502) of the second deflection rollers (2512, 2522, 2532) of the at least one transport belt (251, 252, 253) are arranged at an acute angle of 0.1° to 1.5° relative to the y-direction, and
- **in that** a drive shaft (280) of the ejection roller (281) is arranged parallel or at an acute angle of 0.1° to 1.5° relative to the y-direction.

6. Dynamic scale according to claims 1 through 5, **characterized in that** the first sensor (S1) is a component of the means for determining the length of a flat good, wherein this component of the means is arranged within the dynamic scale.

7. Dynamic scale according to claims 1 through 6, **characterized in that** the start of a counting process and a counting of encoder pulses takes place during the driving of the transport belts arranged on the weighing plate, after the first sensor (S1) has detected the leading edge of the first flat good (G1), wherein the control unit subsequently starts and implements a thickness measurement while the flat good is transported along a path segment of the transport path (T), until the first sensor (S1) detects the trailing edge of the first flat good (G1) at the input of a weighing plate, wherein the length measurement is ended.

8. Dynamic scale according to claims 1 through 6, **characterized in that** at least one additional component of the aforementioned means to determine the length of a flat good is provided outside of the dynamic scale.

9. Dynamic scale according to claims 1 through 6, **characterized in that** the sensors (S1, S2, S3) are designed as transmitted light barriers.

10. Dynamic scale according to claims 1 through 6 and 9, **characterized in that**
- the transmitter/receiver modules of the first photoelectric barrier (LS1) are installed in a retention plate (296) and at the beginning of a transport path (T) immediately before the first deflection rollers of the transport belts of the weighing plate (25), and
- the transmitter/receiver components of the second photoelectric barrier (LS2) are installed in a retention plate (2972) and at the transport path (T), immediately after the deflection rollers of the transport belts of the weighing plate (25), and
- the transmitter/receiver components of the third photoelectric barrier (LS3) are installed in a retention plate (2973) and are arranged at the transport path (T), immediately before the ejection roller (281).

11. Dynamic scale according to claims 1 through 6 as well as 9 and 10, **characterized in that** the ejection roller (281) is installed positively on a drive shaft (280) borne in slide bearings (2811, 2812); **in that** the ejection roller (281) has an external radius (RA) that is much larger than a radius (RU) of the deflection rollers for the transport belts and is larger than a radius (Rw) of the drive shaft (280) of the ejection roller (281); wherein the radius (RA) of the ejection roller (281) minus the radius (Rw) of the drive shaft (280) of the ejection roller (2981) defines a region upstream, in terms of the flow of goods, at a facing side of the ejection roller that enables an arrangement of the u-shaped curved retention plate (2973) for the third sensor (S3).

12. Dynamic scale according to claims 1 and 2, **characterized in that** the transport belts (251, 252, 253) are arranged on the weighing plate (25), such that a first transport belt distance from the guide wall (254) of the weighing plate results in the y-direction on the weighing plate, at the input side in terms of the flow of goods, which first transport belt distance is greater than a second transport belt distance that is measured as a distance from the guide wall (254), displaced in parallel to the transport direction x.

13. Dynamic scale according to claim 5, **characterized in that** a first assembly (30) is provided for thickness measurement of a flat good in the dynamic scale that is to be weighed, the mounting of which is installed at the outer edge (2543) of the collar (2542), near to the corner of the weighing plate (25) that is at the input side, in terms of the flow of goods, wherein the corner exhibits the maximum edge distance (B) from the tangent (t).

14. Dynamic scale according to claims 1 and 13, **characterized in that** the longitudinal edges of the transport belts (251, 252, 253) are arranged on the weighing plate (25), parallel to one another and parallel to the edge (2543) of the collar (2542) of the guide wall (254).

15. Dynamic scale according to claims 1, 3 and 5, **characterized in that** the covering (255) for a width sensor is situated in a parallel plane below the frame (257) of the weighing plate, and as of the output-side edge of the weighing plate rises upward gradually in the transport direction relative to the flat floor plate (290) at such a slope that a transported long flat good does not contact the third subsection (III) of the supply deck upon leaving the second subsection (II).

16. Dynamic scale according to claims 1 and 3, **characterized in that** the covering (255*) for a width sensor (LSB*) is installed on the floor plate (290*) and is situated in a parallel plane below the weighing plate, and as of the output-side edge of the weighing plate rises upward gradually in the transport direction relative to the flat floor plate (290) at such a slope that a transported long flat good does not contact the third subsection (III) of the supply deck upon leaving the second subsection (II).

17. Control method of the dynamic scale, comprising the steps:
a) start a length measurement via the control unit, and following this start the driving of the transport belts of the transport device with a first transport velocity (V1), said transport belts being arranged on the weighing plate, if a first sensor (S1) detects the leading edge of a first flat good (G1),
b) start a dynamic weighing process until a second sensor (S2) detects the leading edge of the first flat good (G1) at the output of a weighing plate, and end the thickness measurement,
c) check whether a valid weight measurement result is present,
d) determine the weight of the first flat good (G1), and further transport of the first flat good (G1) with the first transport velocity (V1) in the transport direction x to the output of the dynamic scale if a valid weight measurement result is present,
e) determine the weight of the first flat good (G1) if the weighing process has not ended, and further transport the first flat good (G1) with a second transport velocity (V2) in the transport direction x to the output of the dynamic scale, wherein the second transport velocity (V2) is lower than the first transport velocity (V1),
f) implement a width measurement of the flat good,
g) initiate the end of the weight measurement during the dynamic weighing process if a third sensor (S3) at the input of a takeoff device of the dynamic scale detects the leading edge of the first flat good (G1) and the check yields that no valid weight measurement result is present, and
h) supply a next flat good (G2) to the input of the dynamic scale if the check yields that a valid weight measurement result is present, and
i) further control the weighing unit and activate a second motor with a third transport velocity in the transport direction x, wherein the motor drives an ejection roller that is arranged to eject the flat good (G1) in the takeoff device, wherein the third transport velocity (V3) is greater than the first transport velocity (V1), and
k) branch back (w) and repeat the routine (100) in the event that no stop command has been given.

18. Control method according to claim 17, **characterized in that** the sensors (S1, S2, S3) are designed as photoelectric barriers (LS1, LS2, LS3), and **in that** the start of a counting process and a counting of encoder pulses takes place during the driving of the transport belts arranged on the weighing plate, after the first photoelectric barrier (LS1) detects the leading edge of the first flat good (G1), subsequently a thickness measurement starts and implements, while the flat good is transported along a path segment of the transport path (T), until the first photoelectric barrier (LS1) detects the trailing edge of the first flat good (G1) at the input of a weighing plate, wherein the length measurement is ended during the path segment.

## Revendications

1. Balance dynamique, comportant
- un premier ensemble disposé côté entrée, destiné à mesurer l'épaisseur, un dispositif de transport, pourvu de courroies de transport placées sur un plateau de pesée, des capteurs, des encodeurs et un deuxième ensemble, destiné à déterminer la largeur du produit, pourvu d'un capteur de largeur, un dispositif d'évacuation disposé côté sortie, pourvu d'un rouleau d'expulsion, ainsi qu'une unité de commande, qui pour les commander, est connectée en communication avec les ensembles précédemment cités, pourvue d'un premier capteur (S1) à l'entrée et d'un deuxième capteur (S2) à la sortie du plateau de pesée, l'unité de commande étant programmée
- pour lancer une mesure de longueur, une mesure d'épaisseur et l'entraînement des courroies de transport du dispositif de transport placées sur le plateau de pesée à une première vitesse de transport (V1), lorsqu'un premier capteur (S1) détecte l'arête antérieure d'un premier produit plat (G1),
- pour le lancement et pour la réalisation d'un processus de pesée dynamique jusqu'à ce que le deuxième capteur (S2) détecte à la sortie du plateau de pesée l'arête antérieure du premier produit plat (G1) et que la mesure de l'épaisseur se termine,
- pour la vérification de la présence d'un résultat valable de la mesure du poids,
- pour déterminer le poids du premier produit plat (G1) et pour transporter ultérieurement le premier produit plat (G1) à la première vitesse de transport (V1) dans la direction de transport X, vers la sortie de la balance dynamique, en présence d'un résultat valable de la mesure du poids,
- pour déterminer le poids du premier produit plat (G1), si le processus de pesée ne s'est par terminé à défaut de la présence d'un résultat valable de la mesure du poids, et pour transporter ultérieurement le premier produit plat (G1) à une deuxième vitesse de transport (V2) dans la direction de transport X vers la sortie de la balance dynamique, la deuxième vitesse de transport (V2) étant inférieure à la première vitesse de transport (V1),
- pour la réalisation d'une mesure de largeur du produit plat,
- pour initier l'achèvement de la mesure de poids pendant le processus de pesée dynamique, si un troisième capteur (S3) détecte à l'entrée d'un dispositif d'évacuation de la balance dynamique l'arête antérieure du premier produit plat (G1) et s'il résulte d'une vérification, qu'on n'est en présence d'aucun résultat valable de la mesure du poids et
- pour amener un prochain produit plat (G2) vers l'entrée de la balance dynamique s'il résulte de la vérification qu'on est en présence d'un résultat valable de la mesure du poids, et
- pour poursuivre l'actionnement de l'entraînement de la courroie de transport de l'unité de pesage à la première vitesse de transport (V1) et pour actionner un deuxième moteur à une troisième vitesse de transport (V3) dans la direction de transport X, le moteur entraînant un rouleau d'expulsion qui, pour expulser le produit plat (G1) est placé dans le dispositif d'évacuation, la troisième vitesse de transport (V3) étant supérieure à la première vitesse de transport (V1) ainsi que
- pour un rétro-aiguillage (w) et une répétition de la routine, si aucune instruction d'arrêt n'a été donnée.

2. Balance dynamique selon la revendication 1, **caractérisée en ce que** le plateau de pesée (25) comporte une paroi de guidage (254) et **en ce qu'**un produit plat (G) couché sur la tranche qui doit être transporté est transporté pendant la pesée par le dispositif de transport dans la direction de transport X d'un système de coordonnées cartésien, **en ce que** la balance dynamique comporte un pont d'alimentation (24) parallèle à un plan x/y, ainsi qu'un dispositif d'évacuation (28) qui est équipé d'un mécanisme presseur (282), et **en ce que** les capteurs et moteurs sont électriquement connectés avec l'unité de commande de la balance dynamique, un premier moteur (256) destiné à entraîner le dispositif de transport et un deuxième moteur (283) destiné à entraîner le dispositif d'évacuation étant prévu, qui est placé à proximité de la sortie de la balance dynamique.

3. Balance dynamique selon les revendications 1 à 2, **caractérisée en ce que** le plateau de pesée (25) comporte une surface de base de forme trapézoïdale, pourvue de deux branches latérales non parallèles, l'une des branches latérales non parallèles butant sur la paroi de guidage (254) du plateau de pesée et formant conjointement avec la paroi de guidage un bord longitudinal, **en ce qu'**un recouvrement (255) destiné à un capteur de largeur fait suite au plateau de pesée (25) dans la direction de transport, **en ce qu'**un orifice pour un deuxième capteur (S2) est prévu dans le recouvrement (255) et **en ce que** des orifices pour les capteurs (S1) et (S3) sont prévus dans le pont d'alimentation (24) et **en ce que** des moyens destinés à déterminer les trois dimensions du produit plat sont placés totalement ou partiellement à l'intérieur de la balance dynamique.

4. Balance dynamique selon les revendications 1 à 3, **caractérisée en ce que** respectivement la plus grande parmi deux branches latérales parallèles de la surface de base de forme trapézoïdale forme un bord transversal, qui est placé du côté entrée du flux de produits de la balance dynamique, **en ce que** le pont d'alimentation (24) est constitué d'un premier segment partiel (I) disposé du côté entrée du flux de produits et d'un quatrième segment partiel (IV) disposé du côté sortie du flux de produits, qui sont séparés l'un de l'autre par un deuxième segment (II) et un troisième segment (III), dans le deuxième segment (II) étant placé le plateau de pesée (25) et dans le troisième segment (III) étant monté le recouvrement (255) destiné à un capteur de largeur sur le plateau de pesée, **en ce qu'**un rouleau d'expulsion (281) du dispositif d'évacuation qui est entraîné par le deuxième moteur (283) saillit à travers un orifice dans le quatrième segment partiel (IV) du pont d'alimentation (24) dans la direction Z et **en ce que** les moyens destinés à déterminer deux parmi les trois dimensions du produit plat sont placés totalement et seul un moyen destiné à déterminer l'une des trois dimensions du produit plat est placé partiellement à l'intérieur de la balance dynamique.

5. Balance dynamique, selon les revendications 1 à 4, **caractérisée en ce qu'**il est prévu un moyen destiné à déterminer la longueur et un moyen destiné à déterminer l'épaisseur d'un produit plat à l'entrée de la balance dynamique,
- **en ce qu'**une cornière métallique (291) est placée avec un écart dans la direction Y par rapport à la paroi de guidage (254) du plateau de pesée et est montée sur une plaque d'embase (290) plane d'un châssis (29) de la balance dynamique, **en ce qu'**un écart maximum de paroi de tôle (A) est prévu entre un endroit sur une paroi arrière (232) d'une coque inférieure de carter (23) de la balance dynamique et une paroi en tôle (292) coudée vers le haut de la cornière métallique (291),
- **en ce qu'**il est prévu une collerette (2542) coudée dans la direction Y à partir de l'arête supérieure de la paroi de guidage (254) et un bord (2543) extérieur sur la collerette (2542),
- **en ce qu'**il est prévu un angle du côté entrée du flux de produits sur le bord extérieur (2543) de la collerette avec un écart maximum de bord (B) par rapport à une tangente (t) virtuelle, la tangente qui est considérée comme étant accostée sur l'endroit le plus éloigné dans la direction Y de la paroi arrière de carter (232) s'étendant à la parallèle de la direction de transport X,
- **en ce qu'**une paroi d'alignement (20) délimite le premier segment partiel (I) disposé du côté entrée du flux de produits dans la direction Y du système de coordonnées cartésien et est placée en étant éloignée d'un écart (C) du côté de l'entrée du flux de produits de la tangente (t),
- **en ce qu'**une paroi d'alignement (21) délimite le quatrième segment partiel (IV) du côté de la sortie du flux de produits dans la direction Y du système de coordonnées cartésien et est placée en étant éloignée d'un écart (D) du côté de la sortie du flux de produits de la tangente (t), pour les écarts, étant appliqué A < B < C ≤ D,
- **en ce qu'**un orifice pour un premier capteur (S1) est prévu dans le premier segment partiel (I) du pont d'alimentation (24) et au voisinage direct de la paroi de guidage (254) du plateau de pesée (25),
- **en ce qu'**un orifice pour un deuxième capteur (S2) est prévu dans le recouvrement (255) et **en ce qu'**un orifice est prévu dans le troisième capteur (S3), dans le quatrième segment partiel du pont d'alimentation (24), **en ce que** le deuxième capteur (S2) est placé avec un premier écart (L1) dans la direction de transport X par rapport au premier capteur (S1) et **en ce que** le troisième capteur (S3) est placé dans le quatrième segment partiel (IV) au voisinage direct de la paroi d'alignement (21) et avec un deuxième écart (L2) par rapport au deuxième capteur (S2), et
- **en ce que** le dispositif d'évacuation (28) est placé sur une plaque d'embase (290) d'un châssis (29), au vis-à-vis d'un rouleau d'expulsion (281) du dispositif d'évacuation se trouvant au moins un doigt presseur (2821, 2822) du mécanisme presseur (282),
- **en ce que** le premier moteur (256) du dispositif de transport est monté dans un bâti (257), en-dessous du plateau de pesée (25) et entraîne l'au moins une courroie de transport (251, 252, 253), qui est placée sur le plateau de pesée (25),
- **en ce qu'**un arbre d'entraînement (2501) des premiers galets de renvoi (2511, 2521, 2531) et un arbre (2502) non entraîné des deuxièmes galets de renvoi (2512, 2522, 2532) de l'au moins une courroie de transport (251, 252, 253) sont placés sous un angle aigu de 0,1 ° à 1,5 ° par rapport à la direction Y, et
- **en ce qu'**un arbre d'entraînement (280) du rouleau d'expulsion (281) est placé à la parallèle ou sous un angle aigu de 0,1 ° à 1,5 ° par rapport à la direction Y.

6. Balance dynamique, selon les revendications 1 à 5, **caractérisée en ce que** le premier capteur (S1) est un élément structurel du moyen destiné à déterminer la longueur d'un produit plat, ledit élément structurel du moyen étant placé à l'intérieur de la balance dynamique.

7. Balance dynamique, selon les revendications 1 à 6, **caractérisée en ce que** le lancement d'un processus de comptage et un comptage d'impulsions d'encodeurs s'effectuent pendant l'entraînement des courroies de transport placées sur le plateau de pesée, après que le premier capteur (S1) ait détecté l'arête antérieure du premier produit plat (G1), l'unité de commande lançant dans la suite une mesure de l'épaisseur et la réalisant aussi longtemps, pendant que le produit plat est transporté le long d'un tronçon de trajet du chemin de transport (T) jusqu'à ce que le premier capteur (S1) détecte à l'entrée d'un plateau de pesée l'arête postérieure du premier produit plat (G1), ce qui met fin à la mesure de la longueur.

8. Balance dynamique, selon les revendications 1 à 6, **caractérisée en ce qu'**au moins un élément structurel supplémentaire du moyen précédemment cité, destiné à déterminer la longueur d'un produit plat est prévu à l'extérieur de la balance dynamique.

9. Balance dynamique, selon les revendications 1 à 6, **caractérisée en ce que** les capteurs (S1, S2, S3) sont conçus sous la forme de capteurs barrages.

10. Balance dynamique, selon les revendications 1 à 6 et 9, **caractérisée en ce que**
- les composants émetteur/récepteur de la première barrière photoélectrique (LS1) sont montés dans une tôle de maintien (296) et sont placés au début d'un chemin de transport (T), directement avant les premiers galets de renvoi des courroies de transport du plateau de pesée (25) et
- les composants émetteur/récepteur de la deuxième barrière photoélectrique (LS2) sont montés dans une tôle de maintien (2972) et sont placés sur le chemin de transport (T), directement après les galets de renvoi des courroies de transport du plateau de pesée (25) et
- les composants émetteur/récepteur de la troisième barrière photoélectrique (LS3) sont montés dans une tôle de maintien (2973) et sont placés sur le chemin de transport (T), directement avant le rouleau d'expulsion (281).

11. Balance dynamique, selon les revendications 1 à 6, ainsi que 9 et 10, **caractérisée en ce que** le rouleau d'expulsion (281) est monté par complémentarité de forme sur un arbre d'entraînement (280) logé dans des paliers lisses (2811, 2812), **en ce que** le rouleau d'expulsion (281) présente un rayon extérieur (RA) qui est nettement supérieur à un rayon (RU) des galets de renvoi pour les courroies de transport et supérieur à un rayon (Rw) de l'arbre d'entraînement (280) du rouleau d'expulsion (281), le rayon (RA) du rouleau d'expulsion (281) dont est déduit le rayon (Rw) de l'arbre d'entraînement (280) du rouleau d'expulsion (281) définissant une région située en amont du flux de produits sur une face frontale du rouleau d'expulsion qui permet un placement de la tôle de maintien (2973) incurvée en forme de U pour le troisième capteur (S3).

12. Balance dynamique, selon les revendications 1 et 2, **caractérisée en ce que** les courroies de transport (251, 252, 253) sont placées sur le plateau de pesée (25), de telle sorte que sur le côté d'entrée du flux de produits, sur le plateau de pesée (25), il résulte un premier écart des courroies de transport par rapport à la paroi de guidage (254) du plateau de pesée dans la direction Y, qui est supérieur à un deuxième écart des courroies de transport, que l'on mesure avec un décalage parallèle dans la direction de transport X en tant qu'écart par rapport à la paroi de guidage (254).

13. Balance dynamique, selon la revendication 5, **caractérisée en ce qu'**un premier ensemble (30) destiné à mesurer l'épaisseur d'un produit plat qui doit être pesé est prévu dans la balance dynamique, dont la fixation est montée sur le bord (2543) extérieur de la collerette (2542), à proximité de l'angle du plateau de pesée (25) qui est disposé à l'entrée du flux de produits, l'angle présentant l'écart (B) maximum du bord par rapport à la tangente (t).

14. Balance dynamique, selon les revendications 1 et 13, **caractérisée en ce que** les arêtes longitudinales des courroies de transport (251, 252, 253) sur le plateau de pesée (25) sont mutuellement parallèles et placées à la parallèle du bord (2543) de la collerette (2542) de la paroi de guidage (254).

15. Balance dynamique, selon les revendications 1, 3 et 5, **caractérisée en ce que** le recouvrement (255) destiné à un capteur de largeur se situe dans un plan parallèle en-dessous du bâti (257) du plateau de pesée et à partir de l'arête disposée du côté sortie du plateau de pesée, croît progressivement vers le haut dans la direction de transport par rapport à la plaque d'embase (290) plane selon une inclinaison, de telle sorte qu'en quittant le deuxième segment partiel (II), un produit plat long transporté ne touche pas le troisième segment partiel (III) du pont d'alimentation.

16. Balance dynamique, selon les revendications 1 et 3, **caractérisée en ce que** le recouvrement (255*) destiné à un capteur de largeur (LSB*) est monté sur la tôle d'embase (290*) et se situe dans un plan parallèle en-dessous du plateau de pesée et à partir de l'arête disposée du côté sortie du plateau de pesée, croît progressivement vers le haut dans la direction de transport par rapport à la plaque d'embase (290) plane selon une inclinaison, de telle sorte qu'en quittant le deuxième segment partiel (II), un produit plat long transporté ne touche pas le troisième segment partiel (III) du pont d'alimentation.

17. Procédé de commande de la balance dynamique, comprenant les étapes consistant à :
a) lancer une mesure de la longueur par l'unité de commande et ensuite, lancer l'entraînement des courroies de transport du dispositif de transport qui sont placées sur le plateau de pesée à une première vitesse de transport (V1), lorsqu'un premier capteur (S1) détecte l'arête antérieure d'un premier produit plat (G1),
b) lancer un processus de pesée dynamique, jusqu'à ce qu'un deuxième capteur (S2) détecte à la sortie d'un plateau de pesée l'arête antérieure du premier produit plat (G1) et terminer la mesure d'épaisseur,
c) vérifier si on est en présence d'un résultat valable de la mesure du poids,
d) déterminer le poids du premier produit plat (G1) et poursuivre le transport du premier produit plat (G1) à la première vitesse de transport (V1) dans la direction de transport X, vers la sortie de la balance dynamique, si on est en présence d'un résultat valable de la mesure du poids,
e) déterminer le poids du premier produit plat (G1), si le processus de pesée n'est pas terminé, et poursuivre le transport du premier produit plat (G1) à une deuxième vitesse de transport (V2) dans la direction de transport X vers la sortie de la balance dynamique, la deuxième vitesse de transport (V2) étant inférieure à la première vitesse de transport (V1),
f) procéder à une mesure de la largeur du produit plat,
g) initier l'achèvement de la mesure de poids pendant le processus de pesée dynamique, lorsqu'un troisième capteur (S3) détecte à l'entrée d'un dispositif d'évacuation de la balance dynamique l'arête antérieure du premier produit plat (G1) et s'il résulte de la vérification qu'on n'est en présence d'aucun résultat valable de la mesure du poids et
h) alimenter un prochain produit plat (G2) vers l'entrée de la balance dynamique s'il résulte de la vérification qu'on est en présence d'un résultat valable de la mesure du poids et
i) poursuivre la commande de l'unité de pesage et actionner un deuxième moteur à une troisième vitesse de transport dans la direction de transport X, le moteur entraînant un rouleau d'expulsion qui pour l'expulsion du produit plat (G1), est placé dans le dispositif d'évacuation, la troisième vitesse de transport (V3) étant supérieure à la première vitesse de transport (V1) et
k) rétro-aiguiller (w) et répéter la routine (100), si aucune instruction d'arrêt n'a été donnée.

18. Procédé de commande selon la revendication 17, **caractérisé en ce que** les capteurs (S1, S2, S3) sont conçus sous la forme de barrières photoélectriques (LS1, LS2, LS3) et **en ce que** le lancement d'un processus de comptage et un comptage d'impulsions d'encodeurs s'effectuent pendant l'entraînement des courroies de transport placées sur le plateau de pesée, après que la première barrière photoélectrique (LS1) ait détecté l'arête antérieure du premier produit plat (G1), ensuite, une mesure d'épaisseur est lancée et réalisée aussi longtemps, pendant que le produit plat est transporté le long d'un tronçon de voie du chemin de transport (T) jusqu'à ce que la première barrière photoélectrique (LS1) détecte à l'entrée d'un plateau de pesée l'arête postérieure du premier produit plat (G1), la mesure de longueur se terminant pendant le tronçon de voie.
